# EUROPEAN PATENT SPECIFICATION

(11) **EP 3 760 668 B1**
(45) Date of publication and mention of the grant of the patent: **16.04.2025**
(21) Application number: 19761577.6
(22) Date of filing: 13.02.2019
(51) Int. Cl.: B29C 65/02, B29C 43/18, B29C 44/56, B32B 3/30, B32B 25/02, B32B 5/02, B32B 5/20, B32B 5/24, B32B 27/06, B32B 27/20, B29C 44/34, B29C 44/44, B29C 65/82, B29K 101/12, B29K 105/04, B29L 31/52

(54) **FOAMED MOLDING, LAMINATED BODY, AND METHOD FOR MANUFACTURING LAMINATED BODY**
GESCHÄUMTER FORMTEIL, SCHICHTKÖRPER UND VERFAHREN ZUR HERSTELLUNG EINES SCHICHTKÖRPERS
MOULAGE EN MOUSSE, CORPS STRATIFIÉ ET PROCÉDÉ DE PRODUCTION DE CORPS STRATIFIÉ

(30) Priority: 02.03.2018 JP 2018037962; 30.08.2018 JP 2018161820
(43) Date of publication of application: 06.01.2021
(73) Proprietor: Kaneka Corporation, Osaka-shi, Osaka 530-8288 (JP)
(72) Inventor: YOSHIDA, Toru, Settsu-shi, Osaka 566-0072 (JP); YOSHIDA, Kentaro, Tokyo 112-0004 (JP)
(74) Representative: Vossius & Partner Patentanwälte Rechtsanwälte mbB
(86) International application number: PCT/JP2019/005159
(87) International publication number: WO 2019/167628

(56) References cited:
- GB-A- 2 273 076
- JP-A- 2000 265 590
- JP-A- 2000 265 590
- JP-A- 2009 297 934
- JP-A- 2012 210 733
- JP-A- 2014 080 022
- JP-A- 2017 531 050
- JP-U- S5 552 262
- JP-U- S5 552 262

## Description

### Technical Field

The present invention relates to an expansion-molded article, a laminated body, and a method of producing a laminated body.

### Background Art

Conventionally, a laminated body has been known which is formed by bonding, to a surface of an expansion-molded article, another member such as a sheet or a film. As such a laminated body, a laminated body has been known which is formed by (i) melting an expansion-molded article or another member by heat and (ii) bonding the expansion-molded article and the another member together by heat fusion.

As an example of the laminated body, Patent Literature 1 discloses an expanded article composite. The expanded article composite is formed by heat-fusing resin film with an expanded article substrate having asperities on a surface thereof. Further, as an example of the laminated body formed by heat fusion, Patent Literature 2 discloses a member for a sanitary equipment room. Moreover, as an example of the expansion-molded article, Patent Literature 3 discloses an expanded container which has, on a surface thereof, projections that are core-vent marks.

### Citation List

### [Patent Literature]

[Patent Literature 1]
   Japanese Unexamined Utility Model Application Publication Jitsukaisho No. 59-131824 (Published on September 4, 1984)
Patent Literature 2]
   Japanese Patent Application Publication Tokukai No. 2008-221520 (Published on September 25, 2008)
[Patent Literature 3]
   Japanese Patent Application Publication Tokukai No. 2013-180772 (Published on September 12, 2013)

GB 2 273 076 A relates to a rigid foam bolster which is secured to a plastic panel through linear welding by being vibrated sufficiently to heat the interface between the foam and panel. The surface of the panel softens and becomes partially molten. The foam is urged into the panel and molten plastic material flows into the foam. Energy directors may be provided on either the foam or panel surfaces. The finished articles are used as energy absorbing panels for installation in motor vehicle interiors.

JP 2000 265590 A relates to heat insulating sheets having uncounted numbers of fine cells formed therein and having depressions and projections formed thereon. The sheets are superposed on each other with their uneven surface internally facing. Further, a low moisture permeable sheet is superposed on one side or on both sides of the superposed heat insulating sheets, to thereby form a heat insulating composite sheet for a building finish member. Thus, the composite sheet is made strong against compression, and its heat insulating performance does not lower with the lapse off time, to thereby exhibit good heat insulation performance.

JP S55 52262 U relates to a core plate made of a polyethylene foam which has two types of protrusions attached thereto.

### Summary of Invention

The invention for which protection is sought is defined by the independent claims. The dependent claims concern particular embodiments. Aspects, embodiments and examples disclosed herein which do not fall within the scope of the appended claims do not form part of the invention and are merely provided for illustrative purposes.

### Technical Problem

However, the expanded article composite disclosed in Patent Literature 1 has a problem that adhesion between the expansion-molded article and the another member is poor or a degree of the adhesion between the expansion-molded article and the another member is biased.

Moreover, the expanded article composite disclosed in Patent Literature 1 also has a problem that an air pocket is likely to be generated between the expansion-molded article and the another member and, consequently, the adhesion between the expansion-molded article and the another member becomes poor or ununiform adhesion is caused.

An object of an aspect of the present invention is to realize an expansion-molded article capable of being firmly heat-fused with another member.

### Solution to Problem

In order to attain the above object, an expansion-molded article in accordance with an aspect of the present invention is an expansion-molded article which is to be heat-fused with another member, including at least one protrusion which is formed on at least one surface of the expansion-molded article which at least one surface is to be heat-fused with the another member, the at least one protrusion having at least two surfaces as viewed from above (in a planar view), as a boundary line between the at least two surfaces, at least one boundary line being present which intersects a direction from an outside of the at least one protrusion toward a center of an apex of the at least one protrusion.

### Advantageous Effects of Invention

According to an aspect of the present invention, it is possible to realize an expansion-molded article capable of being firmly heat-fused with another member.

### Brief Description of Drawings

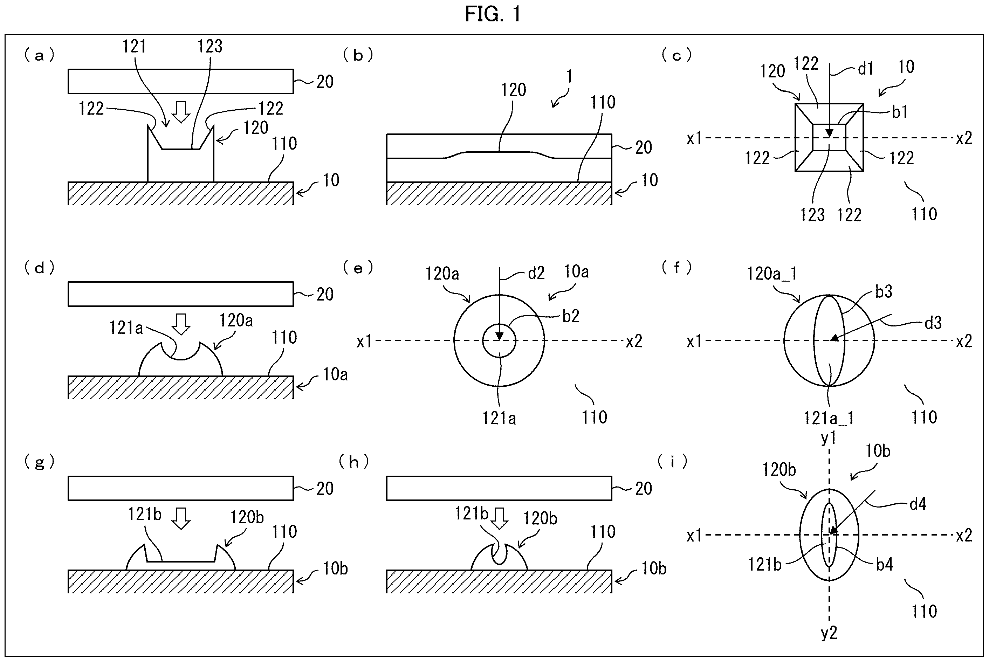

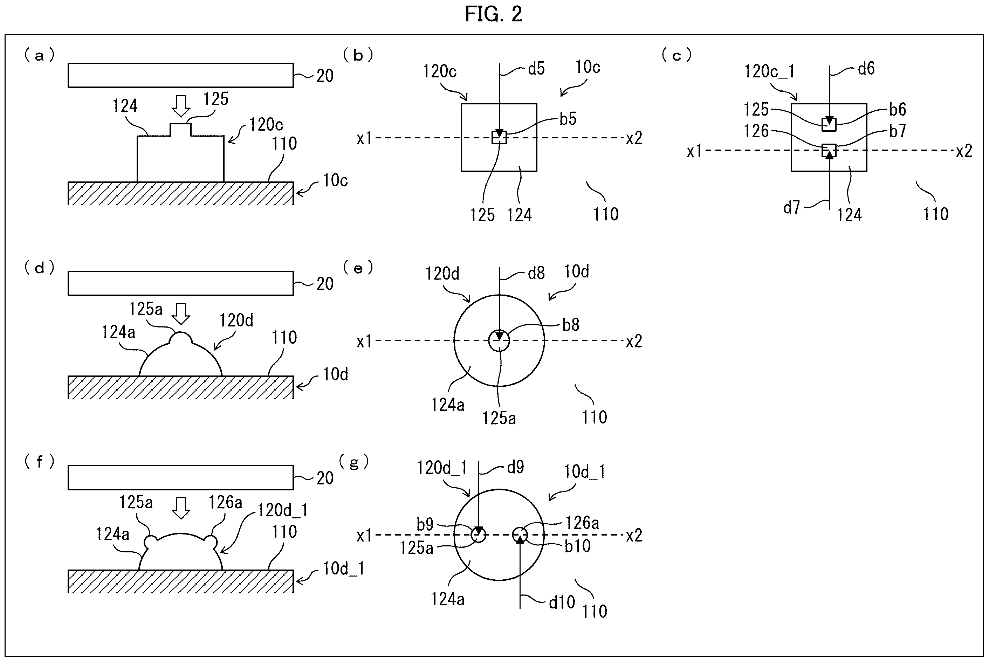

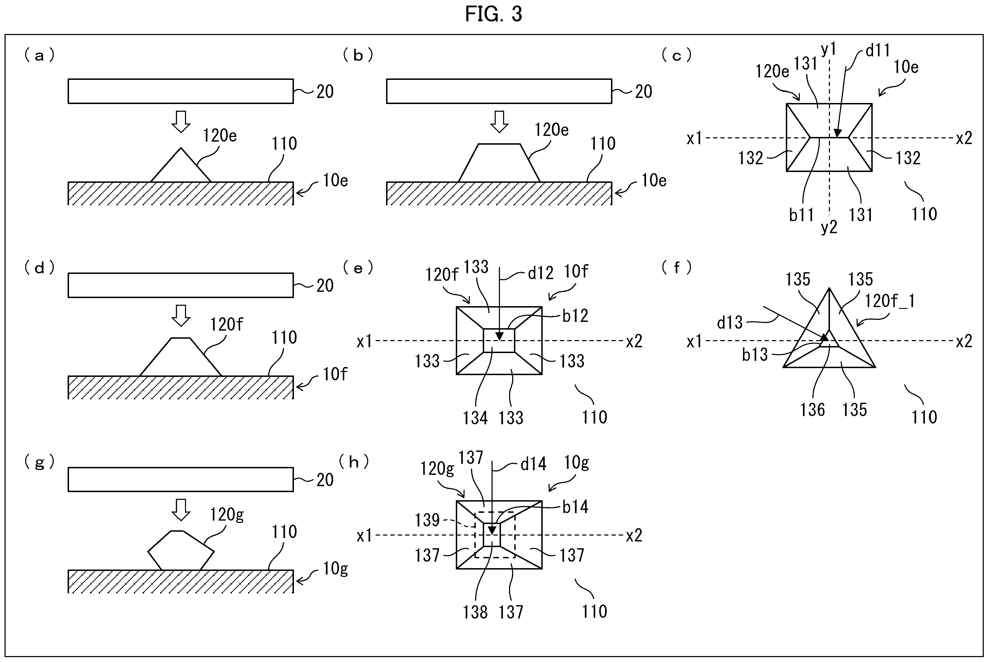

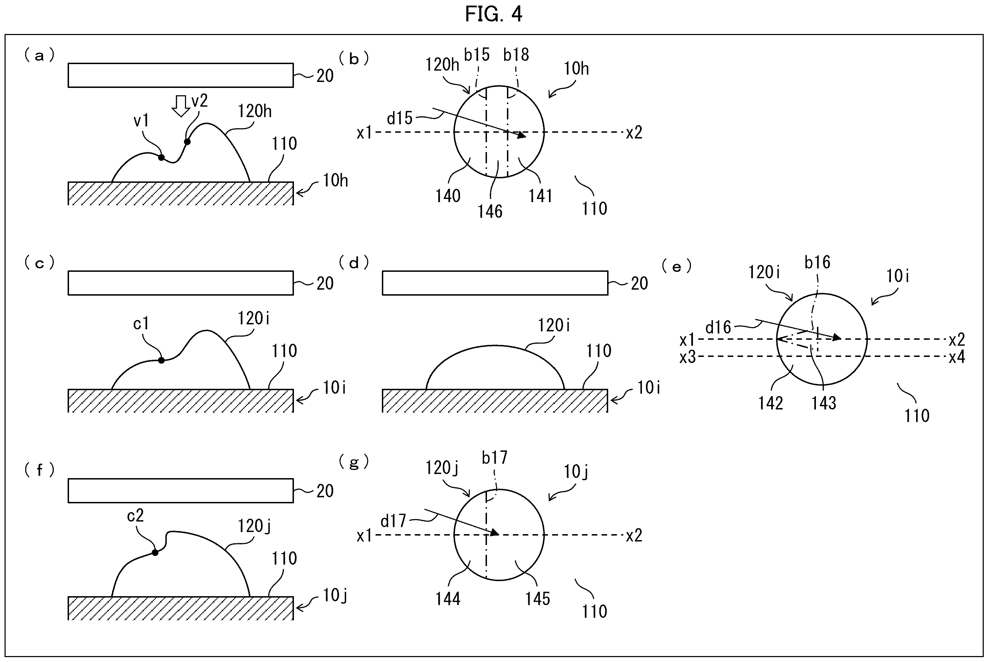

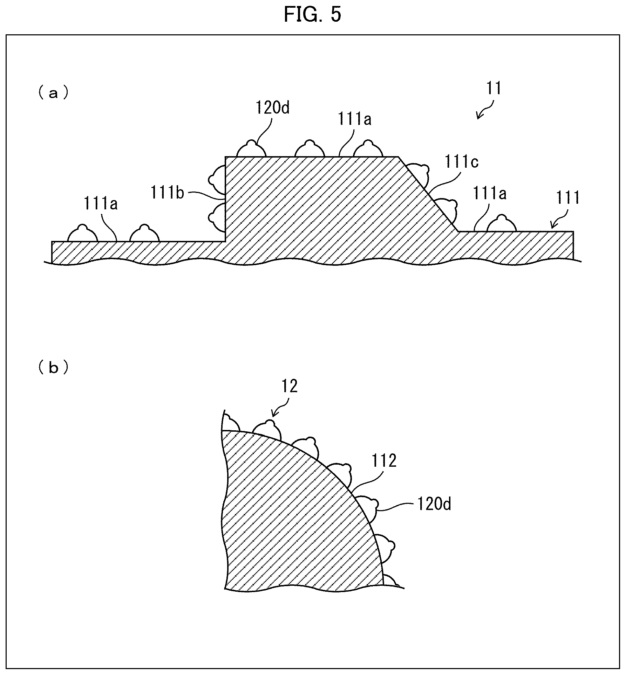

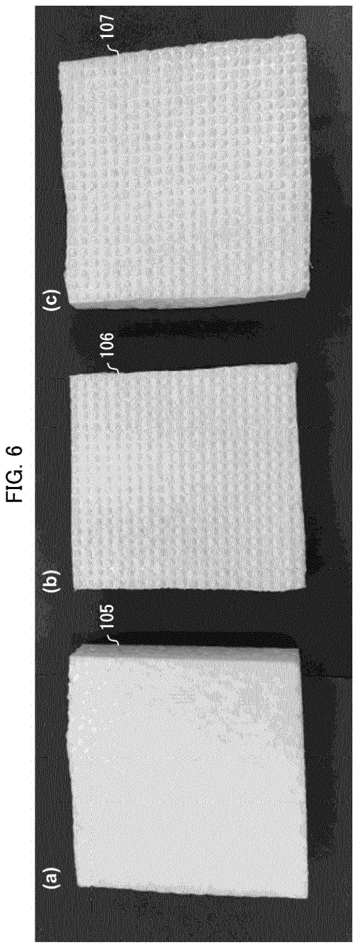

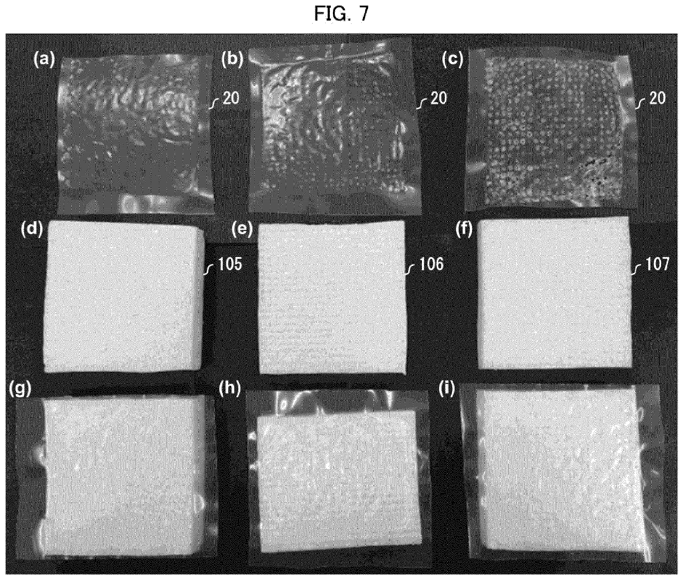

(a) and (c) through (i) of Fig. 1 are each a drawing illustrating an example of a shape of a protrusion of an expansion-molded article in accordance with an embodiment of the present invention. (b) of Fig. 1 is a cross-sectional view illustrating a cross section of a laminated body.
(a) through (g) of Fig. 2 are each a drawing illustrating an example of the shape of the protrusion of the expansion-molded article in accordance with an embodiment of the present invention.
(a) through (h) of Fig. 3 are each a drawing illustrating an example of the shape of the protrusion of the expansion-molded article in accordance with an embodiment of the present invention.
(a) through (g) of Fig. 4 are each a drawing illustrating an example of the shape of the protrusion of the expansion-molded article in accordance with an embodiment of the present invention.
(a) and (b) of Fig. 5 are each a cross-sectional view illustrating a cross section of the expansion-molded article in a case where a base surface of the expansion-molded article is not a planar surface.
(a) of Fig. 6 is a drawing illustrating a conventional expansion-molded article. (b) of Fig. 6 is a drawing illustrating an expansion-molded article which has protrusions each having a hemispherical shape. (c) of Fig. 6 is a drawing illustrating an expansion-molded article which has protrusions each having a hemispherical shape and protrusions illustrated in (d) and (e) of Fig. 2.
(a) through (c) of Fig. 7 are each a drawing illustrating a state of another member which has been peeled from the expansion-molded article after the another member has been heat-fused with the expansion-molded article. (d) through (f) of Fig. 7 are each a drawing illustrating a state of the expansion-molded article from which the another member has been peeled after the another member has been heat-fused with the expansion-molded article. (g) through (i) of Fig. 7 are each a drawing illustrating a state in a case where the another member is heat-fused with the expansion-molded article.

### Description of Embodiments

### (Shape of protrusion of expansion-molded article)

In Figs. 1 through 3, a boundary line between two surfaces of a protrusion is shown by a line. However, the boundary line is not limited to one that can be shown by a line. For example, as illustrated in Fig. 4, in a case where a contour of a cross section of the protrusion can be approximated to a high-order curve, the boundary line between the two surfaces corresponds to an inflection point of the contour. In a case where there is no inflection point, the boundary line between the two surfaces corresponds to a center point of a planar part of the protrusion which planar part is located between the two surfaces. Further, there can be a case where the boundary line between the two surfaces is not clearly recognized as viewed from above (in a planar view). In such a case, the boundary line between the two surfaces of the protrusion also includes a boundary line corresponding to the inflection point as described above and a boundary line corresponding to the center point as described above. The boundary line corresponding to the inflection point and the boundary line corresponding to the center point are each shown by a dash-dot line as illustrated in Fig. 4.

(a) and (c) through (i) of Fig. 1 are each a drawing illustrating an example of a shape of a protrusion of an expansion-molded article. (b) of Fig. 1 is a cross-sectional view illustrating a cross section of a laminated body 1.

(c) of Fig. 1 is a drawing of a protrusion 120, as viewed from above. (a) of Fig. 1 is a cross-sectional view of an expansion-molded article 10, taken from a dotted line x1-x2 illustrated in (c) of Fig. 1. As illustrated in (a) of Fig. 1, another member 20 is heat-fused with a side of the expansion-molded article 10 on which side the protrusion 120 is formed. In short, the expansion-molded article 10 and the another member 20 are fused together by heat.

The expansion-molded article 10 can be a publicly known expansion-molded article such as a foam sheet, a foam board, an in-mold expansion-molded article obtained from expanded particles, or an injection expansion-molded article. The expansion-molded article 10 is made of a thermoplastic resin. Thus, it is possible to melt the thermoplastic resin and heat-fuse the expansion-molded article 10 and the another member 20 together. The thermoplastic resin is not limited to any particular one. Examples of the thermoplastic resin include polyolefin-based resins, polystyrene-based resins, styrene-modified polyolefin-based resins, polyester-based resins, polyphenylene ether-based resins, and polycarbonate-based resins. An expansion ratio of the expansion-molded article 10 is not limited to any particular one. In a case where a polyolefin-based resin is used as the thermoplastic resin, the expansion ratio can be, for example, 5 times, 10 times, 15 times, 20 times, 30 times, 40 times, 45 times, or 60 times.

Since the expansion-molded article 10 is composed of expanded particles, it is possible to melt the expansion-molded article 10 and heat-fuse the expansion-molded article 10 and the another member 20 together. In a case where the expansion-molded article 10 is composed of the expanded particles, it is possible to easily form the protrusion 120 by in-mold expansion molding.

Note that the expansion-molded article 10 is preferably made of an olefin-based resin because the olefin-based resin allows an effect of an aspect of the present invention to be remarkable, allows the expansion-molded article 10 to be excellent in shock absorbing property, chemical resistance, heat resistance, and deformation recovery ratio after compression, and allows the expansion-molded article 10 to be easily recycled. Furthermore, from these viewpoints, the expansion-molded article 10 is preferably one that is formed by subjecting, to in-mold expansion-molding, the expanded particles each of which is made of a polyolefin-based resin.

The another member 20 is not limited to any particular one, provided that the another member 20 can be heat-fused with the expansion-molded article 10. Examples of the another member 20 includes sheets, films, and non-woven fabrics each of which sheets, films, and non-woven fabrics is made of a thermoplastic resin or a thermosetting resin. Examples of the thermoplastic resin and the thermosetting resin include homopolymers, random copolymers, block copolymers, and mixtures thereof. Furthermore, the thermoplastic resin can include thermoplastic resins each of which is reinforced by a fiber, a filler, or a rubber component. Similarly, the thermosetting resin can include thermosetting resins each of which is reinforced by a fiber, a filler, or a rubber component. Out of these materials listed, the another member 20 is preferably a sheet or a film each of which is made of the thermoplastic resin, from the viewpoint of adhesion.

As illustrated in (a) of Fig. 1, at least one surface of the expansion-molded article 10, which at least one surface is to be heat-fused with the another member 20, is constituted by a base surface 110 and at least one protrusion 120 formed on the base surface 110. For example, in a case where the expansion-molded article 10 has a shape of a plate-like rectangular parallelepiped, merely one surface of the expansion-molded article 10, which one surface is to be heat-fused with the another member 20, may be constituted by the base surface 110 and the protrusion 120. Alternatively, merely one surface of the expansion-molded article 10, which one surface is to be heat-fused with the another member 20, and a surface of the expansion-molded article 10, which surface is opposite to the one surface and is to be heat-fused with the another member 20, may be each constituted by the base surface 110 and the protrusion 120. Alternatively, all surfaces of the rectangular parallelepiped, which all surfaces are to be heat-fused with the another member 20, may be each constituted by the base surface 110 and the protrusion 120. Around the protrusion 120, the base surface 110 is exposed outside. Note that the base surface 110 does not need to be exposed outside. In a case where the base surface 110 is not exposed outside, merely the protrusion 120 is exposed outside. Note that, in regard to exposure of the base surface 110, the same applies to protrusions later described.

In a case where the expansion-molded article 10 and the another member 20 are heat-fused together, an apex of the protrusion 120, which apex has a low heat capacity and is accordingly easily melted, first starts to be melted. Thus, since the apex of the protrusion 120 is definitely melted, it is possible to heat-fuse the expansion-molded article 10 and the another member 20 together uniformly in a surface direction. It is therefore possible to firmly heat-fuse the expansion-molded article 10 and the another member 20 together.

In a case where the expansion-molded article 10 and the another member 20 are heat-fused together as illustrated in (b) of Fig. 1, the protrusion 120 is melted, so that the protrusion 120 spreads. This prevents heat from excessively reaching the base surface 110. Since the protrusion 120 is melted on a priority basis, it is possible to reduce a deterioration of the base surface 110 which deterioration is caused by heat. Therefore, it is possible to prevent a reduction in adhesion which reduction is caused by the deterioration of the base surface 110 which deterioration is caused by heat, and possible to prevent a change in shape of the expansion-molded article 10 (particularly, a shape of the base surface 110). In a case where (i) the expansion-molded article 10 and the another member 20 are heat-fused together and (ii) a distance between protrusions 120 is short, the protrusions 120 are melted, and accordingly the expansion-molded article 10 and the another member 20 are heat-fused together, that is, laminated. As a result, the laminated body 1 is formed. In a case where the distance between the protrusions 120 is long, the protrusions 120 are melted on a priority basis, then the base surface 110 is melted, and accordingly the expansion-molded article 10 and the another member 20 are heat-fused together. As a result, the laminated body 1 is formed.

In this manner, it is possible to form the laminated body 1 in which the expansion-molded article 10 and the another member 20 are firmly heat-fused together. Moreover, it is possible to produce the laminated body 1 which has a reduced possibility that the expansion-molded article 10 has a shape which is different from a required shape. Applications of the laminated body 1 include various applications, e.g., automotive and railroad applications such as interior panels for vehicles, deck boards for vehicles, and tibia pads; residential applications such as dressing tables, floor materials, heat-insulating core materials for walls, heat-insulating floor materials for bathrooms, and bathtub lids; transportation applications such as returnable cases and pallets; building materials such as frameworks and base materials; floats such as buoy; and storing containers such as tool boxes.

In a case where the expansion-molded article 10 and the another member 20 are heat-fused together, the protrusion 120 is first melted when the expansion-molded article 10 is heat-fused with the another member 20. Since the protrusion 120 is first melted, it is possible to firmly heat-fuse the expansion-molded article 10 and the another member 20 together. Furthermore, since the protrusion 120 is melted on a priority basis, it is possible to reduce a deterioration of the base surface 110 which deterioration is caused by heat.

In a case where the expansion-molded article 10 and the another member 20 are heat-fused together, a stress is first exerted on the protrusion 120 when the expansion-molded article 10 is heat-fused with the another member 20. Since the stress is first exerted on the protrusion 120, the protrusion 120 is first melted. Moreover, as described above, since the protrusion 120 is melted on a priority basis, it is possible to reduce a deterioration of the base surface 110 which deterioration is caused by heat.

As illustrated in (a) of Fig. 1, the protrusion 120 has a depression 121 in the apex thereof. As illustrated in (c) of Fig. 1, the depression 121 has a structure such that the depression 121 has a depression bottom surface 123 having a rectangular shape and, as viewed from the above, has inclined surfaces 122 around the depression bottom surface 123. Each of the inclined surfaces 122 is inclined so as to go down in a direction from an outside of the protrusion 120 toward the depression bottom surface 123, as viewed from the above. Each of the inclined surfaces 122 has a trapezoidal shape. A bottom surface of the protrusion 120 (i.e., a boundary surface between the base surface 110 and the protrusion 120) has a rectangular shape.

The protrusion 120 has five surfaces as viewed from the above. As a boundary line between two surfaces out of the five surfaces, at least one boundary line is present which intersects a direction from the outside of the protrusion 120 toward a center of the apex of the protrusion 120. In a case where, as the direction from the outside of the protrusion 120 toward the center of the apex of the protrusion 120, a direction d1 is, for example, considered, a boundary line b1 between a corresponding one of the inclined surfaces 122 and the depression bottom surface 123 intersects the direction d1.

According to a configuration of the protrusion 120, part of the protrusion 120 which part is located around the depression 121 has a shape such that the part has a ridge line on an another member 20 side. The ridge line is constituted by boundary lines between the inclined surfaces 122 and outside surfaces of the protrusion 120. The part of the protrusion 120 which part is located around the depression 121 has a tapered shape such that the part has the ridge line on a top thereof, and is easily melted. Therefore, in a case where the expansion-molded article 10 and the another member 20 are heat-fused together, it is possible to more definitely melt the protrusion 120. Accordingly, it is possible to more firmly heat-fuse the expansion-molded article 10 and the another member 20 together.

(e) of Fig. 1 is a drawing of a protrusion 120a, as viewed from above. (f) of Fig. 1 is a drawing of a protrusion 120a_1, as viewed from above. (d) of Fig. 1 is a cross-sectional view of an expansion-molded article 10a, taken from a dotted line x1-x2 illustrated in each of (e) and (f) of Fig. 1. As illustrated in each of (d) and (e) of Fig. 1, instead of the expansion-molded article 10, the expansion-molded article 10a may be used which has the protrusion 120a on a base surface 110 thereof. The protrusion 120a has a structure such that the protrusion 120a has a hemispherical shape and has a depression 121a on an apex thereof. The depression 121a has a curved surface and, as viewed from the above, has a circular shape. As illustrated in (e) of Fig. 1, the protrusion 120a has the depression 121a in a center thereof, as viewed from the above. A bottom surface of the protrusion 120a (i.e., a boundary surface between the base surface 110 and the protrusion 120a) has a circular shape. In a case where, as a direction from an outside of the protrusion 120a toward a center of the apex of the protrusion 120a, a direction d2 is, for example, considered, a boundary line b2 between two surfaces intersects the direction d2.

Note that, as illustrated in (f) of Fig. 1, the protrusion 120a_1 may be formed on the base surface 110. In this case, a depression 121a_1 formed in an apex of the protrusion 120a_1 has a curved surface and, as viewed from the above, has an elliptical shape. Both ends of the depression 121a_1 coincide with a boundary line between the base surface 110 and the protrusion 120a_1, as viewed from the above. A bottom surface of the protrusion 120a_1 (i.e., a boundary surface between the base surface 110 and the protrusion 120a_1) has a circular shape. In a case where, as a direction from an outside of the protrusion 120a_1 toward a center of the apex of the protrusion 120a_1, a direction d3 is, for example, considered, a boundary line b3 between two surfaces intersects the direction d3.

According to respective configurations of the protrusion 120a and the protrusion 120a_1, the bottom surface of the protrusion 120a has a circular shape, and also the bottom surface of the protrusion 120a_1 has a circular shape. With these configurations, in a case where the expansion-molded article 10a and the another member 20 are heat-fused together, the protrusion 120a is melted and then spreads in a circular shape, whereas the protrusion 120a_1 is melted and then spreads in a circular shape. Therefore, it is possible to more firmly heat-fuse the expansion-molded article 10a and the another member 20 together.

(i) of Fig. 1 is a drawing of a protrusion 120b, as viewed from above. (g) of Fig. 1 is a cross-sectional view of an expansion-molded article 10b, taken from a dotted line y1-y2 illustrated in (i) of Fig. 1. (h) of Fig. 1 is a cross-sectional view of the expansion-molded article 10b, taken from a dotted line x1-x2 illustrated in (i) of Fig. 1. As illustrated in (g) of Fig. 1, instead of the expansion-molded article 10, the expansion-molded article 10b may be used which has the protrusion 120b on a base surface 110 thereof.

The protrusion 120b has a structure such that the protrusion 120b has a hemispherical shape and has a depression 121b in an apex thereof. The depression 121b has a curved surface and, as viewed from the above, has an elliptical shape. As illustrated in (i) of Fig. 1, the protrusion 120b has the depression 121a in a center thereof, as viewed from the above. In a case where, as a direction from an outside of the protrusion 120b toward a center of the apex of the protrusion 120b, a direction d4 is, for example, considered, a boundary line b4 between two surfaces intersects the direction d4. A bottom surface of the protrusion 120b (i.e., a boundary surface between the base surface 110 and the protrusion 120b) has an elliptical shape.

(b) of Fig. 2 is a drawing of a protrusion 120c, as viewed from above. (c) of Fig. 2 is a drawing of a protrusion 120c_1, as viewed from above. (a) of Fig. 2 is a cross-sectional view of an expansion-molded article 10c, taken from a dotted line x1-x2 illustrated in each of (b) and (c) of Fig. 2. As illustrated in each of (a) and (b) of Fig. 2, instead of the expansion-molded article 10, the expansion-molded article 10c may be used which has the protrusion 120c on a base surface 110 thereof.

The protrusion 120c includes a first protrusion 124 and a second protrusion 125. The second protrusion 125 is formed on an upper surface of the first protrusion 124. Each of the first protrusion 124 and the second protrusion 125 has a shape of a rectangular parallelepiped. As illustrated in (b) of Fig. 2, the second protrusion 125 is formed in a center of the first protrusion 124. A bottom surface of the protrusion 120c (i.e., a boundary surface between the base surface 110 and the protrusion 120c) has a rectangular shape. In a case where, as a direction from an outside of the protrusion 120c toward a center of an apex of the protrusion 120c, a direction d5 is, for example, considered, a boundary line b5 between two surfaces intersects the direction d5.

Note that, as illustrated in (c) of Fig. 2, the protrusion 120c_1 may be formed on the base surface 110. In this case, second protrusions 125 and 126 are formed on an upper surface of a first protrusion 124. The second protrusion 126 may have a shape identical to or different from that of the second protrusion 125. Moreover, three or more second protrusions may be formed on the upper surface of the first protrusion 124. A bottom surface of the protrusion 120c_1 (i.e., a boundary surface between the base surface 110 and the protrusion 120c_1) has a rectangular shape. In a case where, as a direction from an outside of the protrusion 120c_1 toward a center of an apex of the second protrusion 125, a direction d6 is, for example, considered, a boundary line b6 between two surfaces intersects the direction d6. Further, in a case where, as a direction from the outside of the protrusion 120c_1 toward a center of an apex of the second protrusion 126, a direction d7 is, for example, considered, a boundary line b7 between two surfaces intersects the direction d7.

According to a configuration of the protrusion 120c, the second protrusion 125 has a low heat capacity and is accordingly easily melted. Thus, in a case where the second protrusion 125 is melted by heat, the second protrusion 125 easily spreads on a surface of the first protrusion 124. Moreover, the first protrusion 124 which is to be melted also has a low heat capacity. Therefore, in a case where the expansion-molded article 10c and another member 20 are heat-fused together, it is possible to more definitely melt the protrusion 120c. Accordingly, it is possible to more firmly heat-fuse the expansion-molded article 10c and the another member 20 together. Note that the second protrusion 125 is preferably formed in a vicinity of an apex of the first protrusion 124. This makes it possible to definitely melt a vicinity of the apex of the second protrusion 125.

(e) of Fig. 2 is a drawing of a protrusion 120d, as viewed from above. (d) of Fig. 2 is a cross-sectional view of an expansion-molded article 10d, taken from a dotted line x1-x2 illustrated in (e) of Fig. 2. As illustrated in each of (d) and (e) of Fig. 2, instead of the expansion-molded article 10, the expansion-molded article 10d may be used which has the protrusion 120d on a base surface **110** thereof.

The protrusion 120d includes a first protrusion 124a and a second protrusion 125a. The second protrusion 125a is formed on an apex of the first protrusion 124a. Each of the first protrusion 124a and the second protrusion 125a has a curved surface. As illustrated in (e) of Fig. 2, the second protrusion 125a is formed in a center of the first protrusion 124a. A bottom surface of the protrusion 120d (i.e., a boundary surface between the base surface 110 and the protrusion 120d) has a circular shape. In a case where, as a direction from an outside of the protrusion 120d toward a center of an apex of the protrusion 120d, a direction d8 is, for example, considered, a boundary line b8 between two surfaces intersects the direction d8.

Note that, as illustrated in each of (f) and (g) of Fig. 2, a protrusion 120d_1 may be formed on a base surface 110. In this case, the protrusion 120d_1 includes a first protrusion 124a and second protrusions 125a and 126a. The second protrusions 125a and 126a are formed on the first protrusion 124a. The second protrusion 126a may have a shape identical to or different from that of the second protrusion 125a. Moreover, three or more second protrusions may be formed on an upper surface of the first protrusion 124a. A bottom surface of the protrusion 120d_1 (i.e., a boundary surface between the base surface 110 and the protrusion 120d_1) has a circular shape.

In a case where, as a direction from an outside of the protrusion 120d_1 toward a center of an apex of the second protrusion 125a, a direction d9 is, for example, considered, a boundary line b9 between two surfaces intersects the direction d9. In a case where, as a direction from the outside of the protrusion 120d_1 toward a center of an apex of the second protrusion 126a, a direction d10 is, for example, considered, a boundary line b10 between two surfaces intersects the direction d10. Note that (g) of Fig. 2 is a drawing of the protrusion 120d_1, as viewed from above. (f) of Fig. 2 is a cross-sectional view of an expansion-molded article 10d_1, taken from a dotted line x1-x2 illustrated in (g) of Fig. 2.

(c) of Fig. 3 is a drawing of a protrusion 120e, as viewed from above. (a) of Fig. 3 is a cross-sectional view of an expansion-molded article 10e, taken from a dotted line y1-y2 illustrated in (c) of Fig. 3. (b) of Fig. 3 is a cross-sectional view of the expansion-molded article 10e, taken from a dotted line x1-x2 illustrated in (c) of Fig. 3. As illustrated in (a) of Fig. 3, instead of the expansion-molded article 10, the expansion-molded article 10e may be used which has the protrusion 120e on a base surface 110 thereof.

As illustrated in (c) of Fig. 3, the protrusion 120e has two inclined surfaces 131, each having a trapezoidal shape, and two inclined surfaces 132, each having a triangular shape. Respective upper sides of the two inclined surfaces 131 coincide with each other, and each of the two inclined surfaces 131 is inclined such that respective lower sides of the inclined surfaces 131 go away from each other.

On both sides of the two inclined surfaces 131, the two inclined surfaces 132 are respectively formed, and each of the two inclined surfaces 132 is also inclined. Each of the inclined surfaces 131 and 132 is inclined so as to go up in a direction from an outside of the protrusion 120e toward a center of the protrusion 120e, as viewed from the above. A bottom surface of the protrusion 120e (i.e., a boundary surface between the base surface 110 and the protrusion 120e) has a rectangular shape. In a case where, as a direction from the outside of the protrusion 120e toward a center of an apex of the protrusion 120e, a direction d11 is, for example, considered, a boundary line b11 between the two inclined surfaces 131 intersects the direction d11.

(e) of Fig. 3 is a drawing of a protrusion 120f, as viewed from above. (d) of Fig. 3 is a cross-sectional view of an expansion-molded article 10f, taken from a dotted line x1-x2 illustrated in each of (e) and (f) of Fig. 3. As illustrated in (d) of Fig. 3, instead of the expansion-molded article 10, the expansion-molded article 10f may be used which has the protrusion 120f on a base surface 110 thereof. As illustrated in (e) of Fig. 3, the protrusion 120f has four inclined surfaces 133, each having a trapezoidal shape, and an upper surface 134, having a rectangular shape. Four sides of the upper surface 134 respectively coincide with respective upper sides of the four inclined surfaces 133. Each of the four inclined surfaces 133 is inclined. Each of the inclined surfaces 133 is inclined so as to go up in a direction from an outside of the protrusion 120f toward a center of the protrusion 120f, as viewed from the above. A bottom surface of the protrusion 120f (i.e., a boundary surface between the base surface 110 and the protrusion 120f) has a rectangular shape. In a case where, as a direction from the outside of the protrusion 120f toward a center of an apex of the protrusion 120f, a direction d12 is, for example, considered, a boundary line b12 between a corresponding one of the inclined surfaces 133 and the upper surface 134 intersects the direction d12.

Note that, as illustrated in (f) of Fig. 3, a protrusion 120f_1 may be formed on the base surface 110. The protrusion 120f_1 has three inclined surfaces 135, each having a trapezoidal shape, and an upper surface 136, having a triangular shape. Three sides of the upper surface 136 respectively coincide with respective upper sides of the three inclined surfaces 135. Each of the three inclined surfaces 135 is inclined. Each of the inclined surfaces 135 is inclined so as to go up in a direction from an outside of the protrusion 120f_1 toward a center of the protrusion 120f_1, as viewed from the above. A bottom surface of the protrusion 120f_1 (i.e., a boundary surface between the base surface 110 and the protrusion 120f_1) has a triangular shape. In a case where, as a direction from the outside of the protrusion 120f_1 toward a center of an apex of the protrusion 120f_1, a direction d13 is, for example, considered, a boundary line b13 between a corresponding one of the inclined surfaces 135 and the upper surface 136 intersects the direction d13.

(h) of Fig. 3 is a drawing of a protrusion 120g, as viewed from above. (g) of Fig. 3 is a cross-sectional view of an expansion-molded article 10g, taken from a dotted line x1-x2 illustrated in (h) of Fig. 3. As illustrated in (g) of Fig. 3, instead of the expansion-molded article 10, the expansion-molded article 10g may be used which has the protrusion 120g on a base surface 110 thereof. As illustrated in (h) of Fig. 3, the protrusion 120g has eight inclined surfaces 137, each having a trapezoidal shape, and an upper surface 138 and a bottom surface 139, each having a rectangular shape. The eight inclined surfaces 137 may have an identical shape or different shapes. The upper surface 138 may have a shape identical to or different from that of the bottom surface 139. The protrusion 120g has a shape such that, from an octahedron, two corners of the octahedron are cut out. Parts obtained by cutting out the two corners from the octahedron respectively correspond to the upper surface 138 and the bottom surface 139. In a case where, as a direction from an outside of the protrusion 120g toward a center of an apex of the protrusion 120g, a direction d14 is, for example, considered, a boundary line b14 between a corresponding one of the inclined surfaces 137 and the upper surface 138 intersects the direction d14.

Four sides of the upper surface 138 respectively coincide with respective upper sides of four of the inclined surfaces 137 which four are located on an upper side of the protrusion 120g. Four side of the bottom surface 139 respectively coincide with respective lower sides of four of the inclined surfaces 137 which four are located on a lower side of the protrusion 120g. Respective lower sides of the four of the inclined surfaces 137 which four are located on the upper side of the protrusion 120g coincide with respective upper sides of the four of the inclined surfaces 137 which four are located on the lower side of the protrusion 120g. Each of the eight inclined surfaces 137 is inclined. The bottom surface 139 of the protrusion 120g (i.e., a boundary surface between the base surface 110 and the protrusion 120g) has a rectangular shape.

(b) of Fig. 4 is a drawing of a protrusion 120h, as viewed from above. (a) of Fig. 4 is a cross-sectional view of an expansion-molded article 10h, taken from a dotted line x1-x2 illustrated in (b) of Fig. 4. As illustrated in (a) of Fig. 4, instead of the expansion-molded article 10, the expansion-molded article 10h may be used which has the protrusion 120h on a base surface 110 thereof.

As illustrated in (b) of Fig. 4, the protrusion 120h has curved surfaces 140, 141, and 146. As illustrated in (a) of Fig. 4, a contour of a cross section of the protrusion 120h can be approximated to a high-order curve, and a boundary line b15 between the curved surfaces 140 and 146 corresponds to an inflection point v1 of the contour. A boundary line b18 between the curved surfaces 141 and 146 corresponds to an inflection point v2 of the contour. A bottom surface of the protrusion 120h (i.e., a boundary surface between the base surface 110 and the protrusion 120h) has a circular shape. In a case where, as a direction from an outside of the protrusion 120h toward a center of an apex of the protrusion 120h, a direction d15 is, for example, considered, the boundary line b15 between the curved surfaces 140 and 146 intersects the direction d15. The boundary line b18 between the curved surfaces 141 and 146 intersects the direction d15.

(e) of Fig. 4 is a drawing of a protrusion 120i, as viewed from above. (c) of Fig. 4 is a cross-sectional view of an expansion-molded article 10i, taken from a dotted line x1-x2 illustrated in (e) of Fig. 4. (d) of Fig. 4 is a cross-sectional view of the expansion-molded article 10i, taken from a dotted line x3-x4 illustrated in (e) of Fig. 4. As illustrated in (c) of Fig. 4, instead of the expansion-molded article 10, the expansion-molded article 10i may be used which has the protrusion 120i on a base surface 110 thereof. As illustrated in (e) of Fig. 4, the protrusion 120i has curved surfaces 142 and 143. The curved surface 143 has a substantially triangular shape, as viewed from above, and has a depressed shape. Note that the curved surface 143 may have a substantially quadrangular shape, as viewed from above.

As illustrated in (c) of Fig. 4, a contour of a cross section of the protrusion 120i can be approximated to a high-order curve, and a boundary line b16 between the curved surfaces 142 and 143 corresponds to a center point c1 of the contour. The center point c1 is, in the cross section of the protrusion 120i, a center point of a planar part of the protrusion 120i which planar part is located between the curved surfaces 142 and 143. A bottom surface of the protrusion 120i (i.e., a boundary surface between the base surface 110 and the protrusion 120i) has a circular shape. In a case where, as a direction from an outside of the protrusion 120i toward a center of an apex of the protrusion 120i, a direction d16 is, for example, considered, the boundary line b16 between the curved surfaces 142 and 143 intersects the direction d16.

(g) of Fig. 4 is a drawing of a protrusion 120j, as viewed from above. (f) of Fig. 4 is a cross-sectional view of an expansion-molded article 10j, taken from a dotted line x1-x2 illustrated in (g) of Fig. 4. As illustrated in (f) of Fig. 4, instead of the expansion-molded article 10, the expansion-molded article 10j may be used which has the protrusion 120j on a base surface 110 thereof. As illustrated in (g) of Fig. 4, the protrusion 120j has curved surfaces 144 and 145.

As illustrated in (f) of Fig. 4, a contour of a cross section of the protrusion 120j can be approximated to a high-order curve, and a boundary line b17 between the curved surfaces 144 and 145 corresponds to a center point c2 of the contour. The center point c2 is, in the cross section of the protrusion 120j, a center point of a planar part of the protrusion 120j which planar part is located between the curved surfaces 144 and 145. A bottom surface of the protrusion 120j (i.e., a boundary surface between the base surface 110 and the protrusion 120j) has a circular shape. In a case where, as a direction from an outside of the protrusion 120j toward a center of an apex of the protrusion 120j, a direction d17 is, for example, considered, the boundary line b17 between the curved surfaces 144 and 145 intersects the direction d17.

Note that the shape of the protrusion is not limited to any particular one. The protrusion may merely have a shape of a hemisphere, a quadrangular pyramid, a circular cone, a rectangular parallelepiped, or the like, unlike the protrusions illustrated in Figs. 1 through 4. Note also that the protrusion as described above may be formed on a base surface 110 (on a surface) at a density of not less than 1 per square centimeter and not more than 40 per square centimeter, and may be formed throughout a region of at least not less than 20% of the base surface 110. By forming the protrusion as described above on the base surface 110 at a density of not less than 1 per square centimeter and forming the protrusion throughout the region of at least not less than 20% of the base surface 110, it is possible to firmly heat-fuse the expansion-molded article and the another member 20 together. Moreover, it is possible to reduce a possibility that the expansion-molded article is separated from the another member 20. Note also that the expansion-molded article which has the base surface 110 on which various kinds of protrusions as described above are provided may be formed.

Furthermore, by forming the protrusion as described above on the base surface 110 at a density of not more than 40 per square centimeter, it is possible to reduce a production cost because more protrusions, as described above, than needed are not formed on the base surface 110.

According to the configuration of each of the protrusions illustrated in Figs. 1 through 4, the each of the protrusions has at least two surfaces and, as a boundary line between the two surfaces, at least one boundary line which intersects the direction from the outside of the each of the protrusions toward the center of the apex of the each of the protrusions, as viewed from the above. With this configuration, as viewed from the above, the each of the protrusions has, not a shape such that the each of the protrusions has identical regularity in the direction from the outside of the each of the protrusions toward the apex of the each of the protrusions, but a shape such that the each of the protrusions has a tapered part obtained by a shape changing to different regularity along the way in the direction from the outside of the each of the protrusions toward the apex of the each of the protrusions. The each of the protrusions may have, for example, a shape such that, on the cross section of the each of the protrusions, an angle formed by the bottom surface and the contour of the each of the protrusions changes along the way or a shape such that, on the cross section of the each of the protrusions, a curvature changes along the way (the contour has an inflection point). Alternatively, the each of the protrusions may have a multi-stepped shape or a shape such that the each of the protrusions has a ridge line on the apex thereof.

The each of the protrusions has a boundary line, and has a tapered part. Therefore, in a case where the expansion-molded article and the another member 20 are heat-fused together, the each of the protrusions is easily melted. Accordingly, it is possible to firmly heat-fuse the expansion-molded article and the another member 20 together. Moreover, since the each of the protrusions is melted on a priority basis, it is possible to reduce a deterioration of the base surface 110 which deterioration is caused by heat. Therefore, it is possible to prevent a change in shape of the expansion-molded article (particularly, a shape of the base surface 110).

Furthermore, the protrusion may have a multi-stepped shape, like the protrusion 120 illustrated in (a) through (c) of Fig. 1, the protrusion 120a illustrated in (d) and (e) of Fig. 1, the protrusion 120a_1 illustrated in (f) of Fig. 1, the protrusion 120b illustrated in (g) through (i) of Fig. 1, the protrusion 120c illustrated in (a) and (b) of Fig. 2, and the protrusion 120d illustrated in (d) and (e) of Fig. 2. With this configuration, since an uppermost part of the protrusion in a height direction of the multi-stepped shape is easily melted, it is possible to more definitely melt the protrusion in a case where the expansion-molded article and the another member 20 are heat-fused together.

The protrusion may have a shape such that, as viewed from the above, the protrusion is tapered in a direction from an outside of the protrusion to an apex of the protrusion and the protrusion has a ridge line on the apex of the protrusion, like the protrusion 120e illustrated in (a) through (c) of Fig. 3, the protrusion 120f illustrated in (d) through (f) of Fig. 3, and the protrusion 120g illustrated in (g) and (h) of Fig. 3. With this configuration, part of the protrusion which part corresponds to the ridge line on the apex of the protrusion is easily melted. Therefore, in a case where the expansion-molded article and the another member 20 are heat-fused together, it is possible to more definitely melt the protrusion.

The protrusion may have a shape such that the protrusion has a plurality of protrusions (second protrusions) on the apex of the protrusion, like the protrusion 120c_1 illustrated in (c) of Fig. 2 and the protrusion 120d_1 illustrated in (f) and (g) of Fig. 2. With this configuration, since the plurality of protrusions (second protrusions) of the protrusion are easily melted, it is possible to more definitely melt the protrusion in a case where the expansion-molded article and the another member 20 are heat-fused together.

In short, the shape of the protrusion is at least one selected from the group consisting of (1) the multi-stepped shape, (2) the shape such that, as viewed from the above, the protrusion is tapered in the direction from the outside of the protrusion toward the apex of the protrusion and the protrusion has the ridge line on the apex of the protrusion, and (3) the shape such that the protrusion has the plurality of protrusions on the apex of the protrusion.

A size of the protrusion as has been described is not limited to any particular one. For example, an area of a bottom surface of the protrusion (a boundary surface between the base surface 110 and the protrusion) is not less than 0.25 mm², not less than 0.50 mm², not less than 1.00 mm², not less than 1.20 mm², not less than 1.40 mm², not less than 1.60 mm², not less than 1.80 mm², not less than 2.00 mm², not less than 2.20 mm², not less than 2.40 mm², not less than 2.60 mm², not less than 2.80 mm², not less than 3.00 mm², not less than 3.20 mm², not less than 3.40 mm², not less than 3.60 mm², not less than 3.80 mm², not less than 4.00 mm², not less than 4.50 mm², not less than 5.00 mm², not less than 5.50 mm², not less than 6.00 mm², not less than 7.00 mm², not less than 8.00 mm², not less than 9.00 mm², not less than 10.00 mm², not less than 11.00 mm², not less than 12.00 mm², not less than 13.00 mm², not less than 14.00 mm², not less than 15.00 mm², or the like, and not more than 100.00 mm², not more than 90.00 mm², not more than 80.00 mm², not more than 70.00 mm², not more than 60.00 mm², not more than 50.00 mm², not more than 40.00 mm², not more than 30.00 mm², not more than 20.00 mm², not more than 19.00 mm², not more than 18.00 mm², not more than 17.00 mm², not more than 16.00 mm², not more than 15.00 mm², not more than 14.00 mm², not more than 13.00 mm², not more than 12.00 mm², not more than 11.00 mm², not more than 10.00 mm², or the like.

Further, a height of the protrusion is not less than 0.3 mm, not less than 0.4 mm, not less than 0.5 mm, not less than 0.6 mm, not less than 0.7 mm, not less than 0.8 mm, not less than 0.9 mm, not less than 1.0 mm, not less than 1.5 mm, not less than 2.0 mm, not less than 2.5 mm, not less than 3.0 mm, not less than 3.5 mm, not less than 4.0 mm, not less than 4.5 mm, not less than 5.0 mm, not less than 6.0 mm, not less than 7.0 mm, not less than 8.0 mm, not less than 9.0 mm, not less than 10.0 mm, or the like, and not more than 10.0 mm, not more than 9.0 mm, not more than 8.0 mm, not more than 7.0 mm, not more than 6.0 mm, not more than 5.0 mm, not more than 4.5 mm, not more than 4.0 mm, not more than 3.5 mm, not more than 3.0 mm, not more than 2.5 mm, not more than 2.0 mm, not more than 1.5 mm, not more than 1.0 mm, not more than 0.9 mm, not more than 0.8 mm, not more than 0.7 mm, or the like. In such cases, the expansion-molded article and the another member 20 are likely to have good adhesion therebetween.

In a case where a first protrusion and a second protrusion are formed, the first protrusion has a size described in the immediately previous paragraph, and the second protrusion preferably has a size smaller than that of the first protrusion. Note that, in a case where the first protrusion and the second protrusion are formed, a total height of the protrusion preferably falls within a range of the height of the protrusion which range has been described in the immediately previous paragraph.

### (Base surface)

There is a case where, around the protrusion as has been described, the base surface 110 is exposed outside. In a case where protrusions are arranged on the base surface 110 at substantially regular intervals, it looks as if the base surface 110 has a groove in a grid pattern. This allows the base surface 110 to have a function of a groove through which air is discharged, in a case where the expansion-molded article and the another member 20 are laminated. Thus, it is possible to prevent an air pocket from being generated between the expansion-molded article and the another member 20. As a result, it is possible to firmly heat-fuse the expansion-molded article and the another member 20 together, and also possible to prevent ununiform adhesion from occurring.

Note that, in a case where the protrusions are disposed so as to cover the base surface such that, around the protrusions, the base surface is not exposed outside, it looks as if peripheries of the protrusions form a groove in a grid pattern, because respective upper parts of the protrusions are separated from each other. This allows the peripheries of the protrusions to have a function of a groove (gap) through which air is discharged, in a case where the expansion-molded article and the another member 20 are laminated. Thus, it is possible to prevent an air pocket from being generated between the expansion-molded article and the another member 20. As a result, it is possible to firmly heat-fuse the expansion-molded article and the another member 20 together, and also possible to prevent ununiform adhesion from occurring. Note, however, that, around the protrusions, the base surface is preferably exposed outside, from the viewpoint of a function of discharging air.

### (Method of producing expansion-molded article)

Next, a method of producing the expansion-molded article will be described. The expansion-molded article is produced with use of a fixed mold and a mobile mold which form a molding chamber in which the expansion-molded article is formed. First, the fixed mold and the mobile mold are closed so that the molding chamber is formed, and the molding chamber is filled with expanded particles. Next, the expanded particles are heated by causing steam to pass through the molding chamber. This causes the expanded particles to be fused with each other. Note that, in order to cause the steam to pass through the molding chamber, it is only necessary to provide a publicly known vent hole (core vent) or a publicly known drilled hole in each of the fixed mold and the mobile mold. Subsequently, the fixed mold and the mobile mold are showered with cooling water or the like so that the molding chamber is cooled. The fixed mold and the mobile mold are then opened, and an expansion-molded article is taken out. In this manner, it is possible to produce the expansion-molded article. Such a method is referred to as in-mold expansion molding. The method described here is merely an example.

Note that, in a case where the protrusions in accordance with an aspect of the present invention are formed, it is preferable to, instead of providing the publicly known vent hole or the publicly known drilled hole as it is in each of the fixed mold and the mobile mold, adjust a size, a position, and a shape of the vent hole or the drilled hole as appropriate, in order to cause the object of an aspect of the present invention to be attained and to cause the effect of an aspect of the present invention to be brought about. In other words, the conventionally publicly known vent hole and the conventionally publicly known drilled hole are each insufficient from the viewpoint of the object and the effect of an aspect of the present invention.

At least one of the fixed mold and the mobile mold has a mold surface on at least part of which recesses are formed so that the protrusions as described above are formed on the base surface 110. That is, the protrusions as described above are formed on the base surface 110 by the recesses. Note that the mold surface is a surface of a mold which surface constitutes a molding chamber. Each of the recesses has a shape which fits with a corresponding one of the protrusions as described above. In a case where the protrusions are thus formed by the recesses, it is possible to, with a high degree of freedom and high accuracy, form the shape and dimensions (size) of each of the protrusions, each of which includes a depression, a second protrusion, and/or the like as described above, by adjusting the shape and dimensions (size) of a corresponding one of the recesses.

Note, however, that the shape of each of the recesses does not need to accurately fit with a corresponding one of the protrusions. For example, a case is considered where (i) each of the recesses has a hemispherical shape and (ii) the expanded particles each of which has a substantially spherical shape and each of which has a diameter slightly greater than that of the hemispherical shape of each of the recesses are subjected to in-mold expansion molding. In this case, a situation can arise where a plurality of expanded particles incompletely enter a single recess, that is, a situation can arise where part of a plurality of expanded particles enters a single recess without the single recess being completely filled with a single expanded particle. As a result, each of the protrusions on an in-mold expansion-molded article to be obtained tends to have a shape such that an apex of a hemispherical shape is depressed. This is because the expanded particles with which the molding chamber is filled are less likely to completely fit in the recesses and, accordingly, for example, the expanded particles are less likely to receive heat from the molds during in-mold expansion molding, so that the expanded particles are poorly fused with each other. Thus, an interface between the expanded particles is likely to be depressed. In such a case, the protrusions each of which has an apex in which a depression is formed are likely to be formed.

Further, for example, a case is considered where (i) each of the recesses has a hemispherical shape and (ii) the expanded particles each of which has a substantially spherical shape and each of which has a diameter sufficiently smaller than that of the hemispherical shape of each of the recesses are subjected to in-mold expansion molding. In this case, the expanded particles with which the molding chamber is filled are likely to completely fit in the recesses. Therefore, each of the recesses tends to have a shape which accurately fits with a corresponding one of the protrusions. In other words, each of the protrusions is likely to have a shape which conforms to the shape of a corresponding one of the recesses, that is, each of the protrusions is likely to have a hemispherical shape such that a depression is not formed in an apex.

In contrary, a case is considered where the expanded particles each of which has a substantially spherical shape and each of which has a diameter sufficiently greater than that of the hemispherical shape of each of the recesses are subjected to in-mold expansion molding. In this case, the expanded particles with which the molding chamber is filled are less likely to fit in the recesses, and a possibility that a plurality of expanded particles fit in a single recess is low. Therefore, each of the protrusions tends to have a hemispherical shape such that a depression is not formed in an apex. Although the expanded particles with which the molding chamber is filled are less likely to fit in the recesses, steam during molding causes the expanded particles to be softened and expanded, thereby making it likely for the expanded particles to fit in the recesses. Consequently, each of the protrusions is likely to have a shape which conforms to the shape of a corresponding one of the recesses.

Note, however, that, in a case where the shape of each of the protrusions is adjusted by adjusting the diameter of the hemispherical shape of a corresponding one of the recesses and the diameter of each of the expanded particles as described above, it is not possible to adjust all of the protrusions so as to have an intended shape, and the expansion-molded article is likely to have the protrusions which have various shapes. In order to adjust each of the protrusions so as to have an intended shape, it is preferable to employ a method of adjusting the shape and the dimensions (size) of a corresponding one of the recesses.

As a method of forming the protrusions, holes each passing through at least one of the molds may be formed in the at least one of the molds, instead of the recesses. The holes cause the molding chamber to be communicated with an outside of the molds. Each of the holes has a diameter smaller than that of each of the expanded particles. With this configuration, in a case where the molding chamber is filled with the expanded particles, each of the expanded particles does not enter any of the holes. Therefore, the expanded particles do not leak from the molding chamber through the holes. The expanded particles are softened and expanded in a case where the expanded particles are heated by steam. In so doing, part of the expanded particles enters the holes, so that the protrusions are formed on the base surface 110.

In a case where, instead of the recesses, the holes each passing through at least one of the molds are formed in the at least one of the molds, it is possible to easily create the at least one of the molds, as compared with a case where the recesses are formed in at least one of the molds. Furthermore, even after a mold having no hole is created, it is possible to easily form the holes in the mold, and possible to increase a degree of freedom of forming the protrusions. For example, in a case where (i) the expansion-molded article and the another member 20 are heat-fused together and (ii) part of the expansion-molded article is poor in adhesion, it is possible to increase adhesion between the expansion-molded article and the another member 20 by forming the holes in the mold surface of any of the molds that corresponds to the part of the expansion-molded article which part is poor in adhesion. The recesses and the holes may be used in combination, and the recesses and the holes may be formed in the mold surface of at least one of the molds.

Note that at least one of the recesses may have a hole which passes through the at least one of the molds. The hole causes the molding chamber to be communicated with the outside of the molds. In a case where the molds are filled with the expanded particles, air in the molding chamber is discharged to the outside of the molds. This makes it likely for the recesses to be filled with the expanded particles. As a result, the protrusions are easily formed. Moreover, in a case where the expanded particles are heated by steam during molding, the expanded particles with which the recesses are filled are softened and expanded. This makes it more likely for the recesses to be filled with the expanded particles. That is, this makes it likely for each of the protrusions to have a shape which conforms to the shape of a corresponding one of the recesses. Furthermore, in a case where part of the expanded particles enters the hole, the part of the expanded particles can be a second protrusion. That is, the second protrusion 125a of the protrusion 120d illustrated in (d) and (e) of Fig. 2 may be formed by the expanded particles slightly entering the hole.

The depression 121a of the protrusion 120a illustrated in (d) and (e) of Fig. 1 may be formed by adjusting a pressure of the steam and/or heating time when the expanded particles with which the molding chamber is filled are heated. Specifically, a gap is produced between the expanded particles by adjusting the pressure of the steam and/or the heating time. Producing the gap between the expanded particles causes the shape of each of the recesses, formed in at least one of the molds, not to be completely transferred to the expanded particles. As a result, it is possible to form the depression 121a of the protrusion 120a.

More specifically, the pressure of the steam by which the expanded particles are heated is gradually varied, and adjusted to a pressure lower than a pressure at which the gap between the expanded particles in the recesses, formed in at least one of the molds, is filled and the shape of each of the recesses is completely transferred to the expanded particles. This causes expansion of the expanded particles by the steam to be small.

In this manner, by adjusting the pressure of the steam and/or the heating time when the expanded particles with which the molding chamber is filled are heated, it is possible to find out a condition under which the depression 121a of the protrusion 120a can be formed. Note, however, that a method of forming the depression 121a of the protrusion 120a is not limited to a method of adjusting the pressure of the steam and/or the heating time. The depression 121a of the protrusion 120a may be formed by adjusting various molding conditions.

Alternatively, without use of the fixed mold and the mobile mold, the protrusions as described above may be formed on the base surface 110 by directly cutting the expansion-molded article with use of a tool or the like. Alternatively, the protrusions as described above may be formed on the base surface 110 by (i) heating a mold having a shape which fits with each of the protrusions as described above and (ii) pressing the mold against the expansion-molded article. The other examples of the method of forming the protrusions on the expansion-molded article include the following examples, That is, the other examples of the method include a method of making a transfer by carrying out hot-pressing with use of a mold having asperities, a method of making a transfer with use of a roller having asperities, and a method of forming the protrusions by cutting, each of which methods is carried out when a publicly known thermoplastic foam board, a publicly known thermoplastic foam sheet, or a publicly known injection expansion-molded article is produced. By employing any of these methods, it is possible to form the expansion-molded article which is to be heat-fused with the another member 20.

### (Method of producing laminated body)

In a case where the another member 20 is heat-fused with the expansion-molded article, the another member 20 which is softened in advance without being heated or which is softened in advance by being heated may be laminated on the expansion-molded article having at least one protrusion as described above on the base surface 110. By laminating the another member 20 on the expansion-molded article, the laminated body is formed. By softening the another member 20 in advance, it is possible to increase adhesion between the expansion-molded article and the another member 20. In a case where a melting point of the another member 20 is lower than that of the expansion-molded article, the another member 20 is softened earlier than the expansion-molded article. Therefore, since an excessive pressure is not needed when the another member 20 is laminated on the expansion-molded article, the shape of the expansion-molded article is not changed. Furthermore, it is possible to laminate the another member 20 on the expansion-molded article while preventing a deterioration of a resin of the expansion-molded article.

In a case where the melting point of the another member 20 is higher than that of the expansion-molded article, the protrusion of the expansion-molded article is more easily melted when the another member 20 is laminated on the expansion-molded article. Therefore, an excessive pressure is not needed when the another member 20 is laminated on the expansion-molded article. Accordingly, the shape of the expansion-molded article is not changed. Furthermore, it is possible to laminate the another member 20 on the expansion-molded article while preventing a deterioration of the resin of the expansion-molded article.

Examples of a method of producing the laminated body as described above, specifically, a method of producing the laminated body by laminating and heat-fusing the expansion-molded article and the another member 20 include a method including (i) a laminating step of laminating the another member 20 on a laminating surface of the expansion-molded article on which laminating surface the protrusion is formed and (ii) a pressing step of pressing the expansion-molded article and the another member 20 which are laminated. The method of producing the laminated body preferably further includes a decompressing step. The method of producing the laminated body will be described below for each of these steps.

### Laminating step

The laminating step is a step of laminating the another member 20 on the laminating surface (on which the another member 20 is to be laminated) of the expansion-molded article. Specifically, the laminating step is a step of laminating, on the expansion-molded article having at least one protrusion as described above on the base surface 110, the another member 20 which is softened in advance without being heated or which is softened in advance by being heated. The expansion-molded article used in the laminating step is an expansion-molded article produced by the above-described production method.

### Pressing step

The pressing step is a step of pressing the expansion-molded article and the another member 20 which are laminated in the laminating step. A pressure at which the expansion-molded article and the another member 20 are pressed is not limited to any particular one, provided that the pressure does not cause a change in shape of the expansion-molded article. Moreover, pressing time is also not limited to any particular one.

According to the expansion-molded article, the base surface 110 is exposed outside around the protrusion. In a case where the protrusions are arranged on the base surface 110 at substantially regular intervals, it looks as if the base surface 110 has a groove in a grid pattern. This allows the base surface 110 to have a function of a groove through which air is discharged, in a case where the expansion-molded article and the another member 20 are laminated. Thus, it is possible to prevent an air pocket from being generated between the expansion-molded article and the another member 20. As a result, it is possible to firmly heat-fuse the expansion-molded article and the another member 20 together, and also possible to prevent ununiform adhesion from occurring.

### Heat-fusing step

The heat-fusing step is a step of heat-fusing the expansion-molded article and the another member 20 together. The heat-fusing step may be carried out simultaneously with the pressing step or may be alternatively carried out after the pressing step. A temperature at which heat fusion is carried out and time for which heat fusion is carried out are each not limited to any particular one, and may be each set depending on the melting point of each of the expansion-molded article and the another member 20.

A method of carrying out the pressing step and the heat-fusing step specifically includes the following three molding methods:
(1) thermocompression (press) molding in which the expansion-molded article and the another member 20 are sandwiched between hot pressing plates (molding in which the pressing step and the heat-fusing step are simultaneously carried out);
(2) pressure roller molding in which the expansion-molded article and the another member 20 which is not heated in advance or which is heated in advance are caused to pass over at least one roller which is not heated or which is heated (molding in which the pressing step is carried out and then the heat-fusing step is carried out, molding in which the pressing step and the heat-fusing step are simultaneously carried out, or molding in which pressing is carried out with use of a roller which is not heated (pressing step) and then heat fusion is carried out with use of a roller which is heated (heat-fusing step)); and
(3) integral blow molding in which the expansion-molded article and the another member 20 which is softened or melted are placed between molds of a divisible type and the molds are closed so that the expansion-molded article and the another member 20 are surface-bonded (molding in which the pressing step and the heat-fusing step are simultaneously carried out).

After the expansion-molded article and the another member 20 are laminated, the expansion-molded article and the another member 20 are subjected to the pressing step in which, for example, the thermocompression (press) molding, the pressure roller molding, the integral blow molding, or the like is carried out. This promotes discharge of air trapped between the expansion-molded article and the another member 20. It is therefore possible to prevent an air pocket from being generated between the expansion-molded article and the another member 20.

### Decompressing step

The decompressing step which is carried out as necessary may be carried out simultaneously with at least one of the laminating step, the pressing step, and the heat-fusing step, may be alternatively carried out before the laminating step or between any of these steps, or may be alternatively carried out throughout all of these steps including before the laminating step and between any of these steps. The decompressing step is preferably carried out simultaneously with the pressing step. A degree of decompression only needs to be a degree which does not cause a change in shape of the expansion-molded article. Specifically, the degree of decompression can be adjusted, as appropriate, in consideration of an amount of air trapped between the expansion-molded article and the another member 20, a surface property of the laminated body to be produced, and the like.

By carrying out the decompressing step, air trapped between the expansion-molded article and the another member 20 is more efficiently discharged along the base surface 110, which has a function of a groove. It is therefore possible to further prevent an air pocket from being generated between the expansion-molded article and the another member 20.

Examples of a method of carrying out decompression include: a method of decompressing the whole of space surrounding the expansion-molded article and the another member 20; a method of decompressing the whole or part of space surrounding a boundary between the expansion-molded article and the another member 20; and a method of decompressing part of the boundary between the expansion-molded article and the another member 20 (directly remove air trapped between the expansion-molded article and the another member 20). In a case where the protrusions are arranged on the base surface 110 at substantially regular intervals, it looks as if the base surface 110 has a groove in a grid pattern. Therefore, it is possible to discharge air trapped between the expansion-molded article and the another member 20 even by the method of decompressing part of the space surrounding the boundary between the expansion-molded article and the another member 20 or the method of decompressing part of the boundary between the expansion-molded article and the another member 20.

Note that examples of a method of further carrying out the above-described decompressing step in addition to the pressing step and the heat-fusing step include vacuum molding and air-pressure molding. In a case where the decompressing step is carried out, the pressing step can be carried out with use of a difference in air pressure. Specific examples of the vacuum molding and the air-pressure molding include molding which is carried out with use of a TOM molding machine (three-dimensional surface decoration molding machine) available from Fu-se Vacuum Forming Ltd.

Note, however, that the method of producing the laminated body is not limited to the method including the above-described steps.

### (Case where base surface of the expansion-molded article is not planar surface)

(a) and (b) of Fig. 5 are each a cross-sectional view illustrating a cross section of the expansion-molded article in a case where the base surface of the expansion-molded article is not a planar surface. As illustrated in (a) of Fig. 5, a base surface 111 of an expansion-molded article 11 is constituted by horizontal surfaces 111a, a vertical surface 111b, and an inclined planar surface 111c.

The vertical surface 111b is a surface perpendicular to the horizontal surfaces 111a. The inclined planar surface 111c is a surface located between two of the horizontal surfaces 111a, and is a surface inclined from a higher one of the two of the horizontal surfaces 111a toward a lower one of the two of the horizontal surfaces 111a. Protrusions 120d are formed on each of the horizontal surfaces 111a, the vertical surface 111b, and the inclined planar surface 111c. Note that protrusions each of which has any other shape as described above may be formed on each of the horizontal surfaces 111a, the vertical surface 111b, and the inclined planar surface 111c. Note also that the base surface which has any other shape may be formed by combining, as appropriate, the horizontal surfaces 111a, the vertical surface 111b, and the inclined planar surface 111c.

As illustrated in (b) of Fig. 5, a base surface 112 of an expansion-molded article 12 is a curved surface. Protrusions 120d are formed on the base surface 112. Note that protrusions each of which has any other shape as described above may be formed on the base surface 112. The base surface of the expansion-molded article may be a base surface which has any other shape that is not horizontal, other than a shape of the base surface as illustrated in each of (a) and (b) of Fig. 5. In this manner, the base surface of the expansion-molded article does not need to be a horizontal surface. It is also possible to heat-fuse the another member 20 with the expansion-molded article which has the base surface that is not a horizontal surface.

(a) of Fig. 6 is a drawing illustrating a conventional expansion-molded article 105. (b) of Fig. 6 is a drawing illustrating an expansion-molded article 106 which has protrusions each having a hemispherical shape. (c) of Fig. 6 is a drawing illustrating an expansion-molded article 107 which has protrusions each having a hemispherical shape and protrusions 120d.

As illustrated in (a) of Fig. 6, a protrusion is not formed on a base surface of the conventional expansion-molded article 105. Note, however, that a surface of the expansion-molded article 105 is not completely planar, and the expansion-molded article 105 has fine asperities. As illustrated in (b) of Fig. 6, the protrusions each having a hemispherical shape are formed on a base surface of the expansion-molded article 106. As illustrated in (c) of Fig. 6, the protrusions, each having a hemispherical shape, and the above-described protrusions 120d are formed in combination on a base surface of the expansion-molded article 107.

(a) through (c) of Fig. 7 are each a drawing illustrating a state of the another member 20 which has been peeled from the expansion-molded article after the another member 20 has been heat-fused with the expansion-molded article. (d) through (f) of Fig. 7 are each a drawing illustrating a state of the expansion-molded article from which the another member 20 has been peeled after the another member 20 has been heat-fused with the expansion-molded article. (g) through (i) of Fig. 7 are each a drawing illustrating a state in a case where the another member 20 is heat-fused with the expansion-molded article. In Fig. 7, the another member 20 is a film.

(a), (d), and (g) of Fig. 7 are each a drawing concerning the conventional expansion-molded article 105. (b), (e), and (h) of Fig. 7 are each a drawing concerning the expansion-molded article 106. (c), (f), and (i) of Fig. 7 are each a drawing concerning the expansion-molded article 107.

As illustrated in each of (a) through (c) of Fig. 7, part of the expansion-molded article adheres to the another member 20 which has been peeled from the expansion-molded article after the another member 20 has been heat-fused with the expansion-molded article. Here, that the expansion-molded article which adheres to the another member 20 is larger in amount means that the expansion-molded article and the another member 20 are more firmly fused together.

Note that a laminated body illustrated in each of (g) through (i) of Fig. 7 can be produced as follows. Each of the expansion-molded articles 105, 106, and 107 is obtained by subjecting expanded polypropylene-based resin particles to in-mold expansion molding. The expanded polypropylene-based resin particles can be, for example, EPERAN available from Kaneka Corporation. The expansion-molded article 105 is formed with use of the expanded polypropylene-based resin particles each of which has a diameter of approximately 5 mm, and is a conventional expansion-molded article obtained by in-mold expansion molding without forming a recess and a hole in a mold surface of any of molds. In short, any protrusion in accordance with an aspect of the present invention is not formed on a surface of the expansion-molded article 105 which surface is to be heat-fused with the another member 20.

The expansion-molded article 106 is formed with use of the expanded polypropylene-based resin particles each of which has a diameter of approximately 5 mm, and is the expansion-molded article in accordance with an aspect of the present invention which expansion-molded article is obtained by in-mold expansion molding with use of molds at least one of which has a mold surface on which recesses are formed. In this case, on the mold surface of the at least one of the molds, the recesses each of which has a substantially hemispherical shape and each of which has a diameter of 3.5 mm and a depth of 1 mm are formed at regular intervals at a density of 4 per square centimeter. Thus, the protrusions each of which has a substantially hemispherical shape and each of which has a diameter of 3.5 mm (an area of a bottom surface is 9.6 mm²) and a height of 1 mm are formed on a surface of the expansion-molded article 106 which surface is to be heat-fused with the another member 20.

The expansion-molded article 107 is formed with use of the expanded polypropylene-based resin particles each of which has a diameter of approximately 5 mm, and is the expansion-molded article in accordance with an aspect of the present invention which expansion-molded article is obtained by in-mold expansion molding with use of molds at least one of which has a mold surface on which recesses are formed. Some of the recesses each have, in its bottom, a hole which has a diameter of 1.5 mm and which passes through the at least one of the molds. In this case, in the mold surface of the at least one of the molds, the recesses each of which has a substantially hemispherical shape and each of which has a diameter of 3.5 mm and a depth of 1 mm are formed at regular intervals at a density of 4 per square centimeter. Further, the hole which has a diameter of 1.5 mm is formed in the bottom of, for example, every third recess. That is, the protrusions 120d are formed on the base surface 110 of the expansion-molded article by the every third recess. Each of the protrusions 120d is constituted by (i) a first protrusion which has a substantially hemispherical shape and which has a diameter of 3.5 mm (an area of a bottom surface is 9.6 mm²) and a height of 1 mm and (ii) a second protrusion which is formed on an apex of the first protrusion and which has a diameter of 1.5 mm and a height of 1 mm.

Next, a polypropylene-based resin film which is commercially available and which has a thickness of 0.2 mm is placed on the surface of each of the expansion-molded articles 105, 106, and 107. An obtained object is pressed from a polypropylene-based resin film side for 1 minute and 30 seconds at a pressure of 6 gf/cm² with use of a hot plate which is adjusted to a temperature of 150°C. The laminated body illustrated in each of (g) through (i) of Fig. 7 can be thus produced. Note that the above-described method of producing the laminated body is an example.

Each of (a) through (c) of Fig. 7 illustrates the amount of the expansion-molded article which adheres to the another member 20. Out of these amounts, the amount of the expansion-molded article 105 which adheres to the another member 20 ((a) of Fig. 7) is the smallest, and the amount of the expansion-molded article 107 which adheres to the another member 20 ((c) of Fig. 7) is the largest. That is, out of (a) through (c) of Fig. 7, adhesion between the expansion-molded article 105 and the another member 20 is the poorest, and adhesion between the expansion-molded article 107 and the another member 20 is the strongest. Furthermore, the another member 20 illustrated in (c) of Fig. 7 is partially torn. As such, the adhesion between the expansion-molded article 107 and the another member 20 is particularly strong.

Therefore, by forming the protrusions, each of which has a hemispherical shape, on the base surface of the expansion-molded article 106, it is possible to increase adhesion between the expansion-molded article 106 and the another member 20 in a case where the expansion-molded article 106 and the another member 20 are heat-fused together. Furthermore, by forming the protrusions 120d on the base surface of the expansion-molded article 107, it is possible to further increase the adhesion between the expansion-molded article 107 and the another member 20 in a case where the expansion-molded article 107 and the another member 20 are heat-fused together.

In particular, the protrusions, each having a hemispherical shape, and the above-described protrusions 120d are formed in combination on the base surface of the expansion-molded article 107. Although two protrusions each having a hemispherical shape are provided between the protrusions 120d, it is possible to increase the adhesion throughout the whole of a bonded surface.

Note that Patent Literature 2 discloses, in Fig. 2, a configuration in which asperities are formed on a lower side of a foam layer. The asperities are asperities caused by cells generated during expansion (preliminary expansion) for forming the foam layer such as polystyrene foam, that is, asperities formed between expanded particles or on an interface between the expanded particles. As such, the asperities are different from the protrusion in accordance with an aspect of the present invention. It is explained, with use of the above-described expansion-molded article 105, that adhesion of the foam layer with another member is poor.

Moreover, Patent Literature 2 discloses that, according to the invention of Patent Literature 2, the foam layer is caused to adhere to a surface of a base material by residual heat of the base material. Thus, Patent Literature 2 suggests that, according to the invention of Patent Literature 2, heat is transferred to the whole of the base material. In contrast, according to an aspect of the present invention, a mold or the another member 20, each of which heats up, is brought into contact with the protrusion of the expansion-molded article so that heat is transferred to the protrusion and the protrusion is melted on a priority basis.

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:
An expansion-molded article in accordance with an aspect of the present invention is an expansion-molded article which is to be heat-fused with another member, including at least one protrusion which is formed on at least one surface of the expansion-molded article which at least one surface is to be heat-fused with the another member, the at least one protrusion having at least two surfaces as viewed from above (in a planar view), as a boundary line between the at least two surfaces, at least one boundary line being present which intersects a direction from an outside of the at least one protrusion toward a center of an apex of the at least one protrusion.

According to the above configuration, as viewed from the above, the at least one protrusion has, as the boundary line between the two surfaces, the at least one boundary line which intersects the direction from the outside of the at least one protrusion toward the center of the apex of the at least one protrusion. Therefore, as viewed from the above, the at least one protrusion has, not a shape such that the at least one protrusion has identical regularity in the direction from the outside of the at least one protrusion toward the apex of the at least one protrusion, but a shape such that the at least one protrusion has a tapered part obtained by a shape changing to different regularity along the way in the direction from the outside of the at least one protrusion toward the apex of the at least one protrusion. The at least one protrusion may have, for example, a shape such that, on a cross section of the at least one protrusion, an angle formed by a bottom surface and a contour of the at least one protrusion changes along the way or a shape such that, on the cross section of the at least one protrusion, a curvature changes along the way (the contour has an inflection point). Alternatively, the at least one protrusion may have a multi-stepped shape or a shape such that the at least one protrusion has a ridge line on the apex of the at least one protrusion.

Furthermore, the at least one protrusion has the boundary line, and has the tapered part. Therefore, in a case where the expansion-molded article and the another member are heat-fused together, the at least one protrusion is easily melted. Accordingly, it is possible to firmly heat-fuse the expansion-molded article and the another member together.

The expansion-molded article in accordance with another aspect of the present invention is preferably arranged such that a shape of the at least one protrusion is at least one selected from the group consisting of (1) a multi-stepped shape, (2) a shape such that, as viewed from the above, the at least one protrusion is tapered in a direction from the outside of the at least one protrusion toward the apex of the at least one protrusion and has a ridge line on the apex of the at least one protrusion, and (3) a shape such that the at least one protrusion has a plurality of protrusions on the apex of the at least one protrusion.

According to the above configuration, in a case where the at least one protrusion has the multi-stepped shape, an uppermost part of the at least one protrusion in a height direction of the multi-stepped shape is easily melted. Therefore, it is possible to more definitely melt the at least one protrusion in a case where the expansion-molded article and the another member are heat-fused together.

Furthermore, in a case where the at least one protrusion has the shape such that, as viewed from the above, the at least one protrusion is tapered in the direction from the outside of the at least one protrusion toward the apex of the at least one protrusion and the at least one protrusion has a ridge line on the apex of the at least one protrusion, part of the at least one protrusion which part corresponds to the ridge line on the apex of the at least one protrusion is easily melted. Therefore, in a case where the expansion-molded article and the another member are heat-fused together, it is possible to more definitely melt the at least one protrusion.

Moreover, in a case where the at least one protrusion has the shape such that the at least one protrusion has the plurality of protrusions on the apex of the at least one protrusion, the plurality of protrusions of the at least one protrusion are easily melted. Therefore, it is possible to more definitely melt the at least one protrusion in a case where the expansion-molded article and the another member are heat-fused together. Accordingly, it is possible to more firmly heat-fuse the expansion-molded article and the another member together.

The expansion-molded article in accordance with another aspect of the present invention is preferably arranged such that the at least one protrusion includes a first protrusion and a second protrusion; and the second protrusion is formed on the first protrusion.

According to the above configuration, the at least one protrusion may include the first protrusion and the second protrusion, and the second protrusion may be formed on the first protrusion. The second protrusion has a low heat capacity and is accordingly easily melted. Thus, in a case where the second protrusion is melted by heat, the second protrusion easily spreads on a surface of the first protrusion. Moreover, the first protrusion which is to be melted also has a low heat capacity. Therefore, in a case where the expansion-molded article and the another member are heat-fused together, it is possible to more definitely melt the at least one protrusion. Accordingly, it is possible to more firmly heat-fuse the expansion-molded article and the another member together. Note that the second protrusion is preferably formed in a vicinity of an apex of the first protrusion. Note also that a plurality of second protrusions may be formed.

The expansion-molded article in accordance with another aspect of the present invention is preferably arranged such that the at least one protrusion has a depression in the apex of the at least one protrusion.

According to the above configuration, the at least one protrusion has the depression which is formed in the apex of the at least one protrusion. Part of the at least one protrusion which part is located around the depression has a shape such that the part has a ridge line, and is accordingly easily melted. Therefore, it is possible to more definitely melt the at least one protrusion in a case where the expansion-molded article and the another member are heat-fused together. Accordingly, it is possible to more firmly heat-fuse the expansion-molded article and the another member together.

The expansion-molded article in accordance with another aspect of the present invention is preferably arranged such that a bottom surface of the at least one protrusion has a circular shape or an elliptical shape.

According to the above configuration, the bottom surface of the at least one protrusion has the circular shape or the elliptical shape. Therefore, in a case where the expansion-molded article and the another member are heat-fused together, the at least one protrusion is melted and then spreads in the circular shape or in the elliptical shape. Therefore, it is possible to more firmly heat-fuse the expansion-molded article and the another member together.

The expansion-molded article in accordance with another aspect of the present invention is preferably arranged such that the expansion-molded article is composed of expanded particles.

According to the above configuration, the expansion-molded article is composed of the expanded particles. Therefore, it is possible to melt the expansion-molded article and thereby heat-fuse the expansion-molded article and the another member together. Furthermore, in a case where the expansion-molded article is composed of the expanded particles, it is possible to easily form the at least one protrusion by in-mold expansion molding.

The present invention relates expansion-molded article in accordance with another aspect of the present invention is preferably arranged such that the at least one protrusion is formed on the at least one surface of the expansion-molded article, which at least one surface is to be heat-fused with the another member, at a density of not less than 1 per square centimeter and not more than 40 per square centimeter, and is formed throughout a region of at least not less than 20% of the at least one surface of the expansion-molded article, which at least one surface is to be heat-fused with the another member.

According to the above configuration, the at least one protrusion is formed on the at least one surface of the expansion-molded article, which at least one surface is to be heat-fused with the another member, at a density of not less than 1 per square centimeter, and is formed throughout a region of at least not less than 20% of the at least one surface of the expansion-molded article, which at least one surface is to be heat-fused with the another member. Therefore, it is possible to firmly heat-fuse the expansion-molded article and the another member together. Moreover, it is possible to reduce a possibility that the expansion-molded article is separated from the another member.

Furthermore, the at least one protrusion is formed on the at least one surface of the expansion-molded article, which at least one surface is to be heat-fused with the another member, at a density of not more than 40 per square centimeter. Therefore, it is possible to reduce a production cost without forming an extra protrusion on the at least one surface of the expansion-molded article, which at least one surface is to be heat-fused with the another member.

The expansion-molded article in accordance with another aspect of the present invention is preferably arranged such that the at least one surface of the expansion-molded article, which at least one surface is to be heat-fused with the another member, is constituted by a base surface and the at least one protrusion which is formed on the base surface; and around the at least one protrusion, the base surface is exposed outside.

According to the above configuration, the at least one surface of the expansion-molded article, which at least one surface is to be heat-fused with the another member, is constituted by the base surface and the at least one protrusion which is formed on the base surface, and around the at least one protrusion, the base surface is exposed outside. This causes the at least one protrusion to be melted on a priority basis in a case where the expansion-molded article and the another member are heat-fused together. Therefore, it is possible to prevent the base surface from being melted. Accordingly, it is possible to prevent a change in shape of the base surface. It is therefore possible to prevent a change in shape of the expansion-molded article.

Moreover, since around the at least one protrusion, the base surface is exposed outside, it is possible to prevent an air pocket from being generated between the expansion-molded article and the another member. As a result, it is possible to firmly heat-fuse the expansion-molded article and the another member together, and also possible to prevent ununiform adhesion from occurring.

A laminated body in accordance with an aspect of the present invention is a laminated body including: the expansion-molded article; and another member which is laminated on the expansion-molded article.

According to the above configuration, it is possible to form a laminated body in which the expansion-molded article and the another member are firmly heat-fused together.

A method of producing a laminated body in accordance with an aspect of the present invention is a method of producing a laminated body by laminating and heat-fusing the expansion-molded article and the another member, the method including: a laminating step of laminating the another member on a laminating surface of the expansion-molded article on which laminating surface at least one protrusion is formed; and a pressing step of pressing the expansion-molded article and the another member which are laminated.

According to the above configuration, it is possible to produce a laminated body in which the expansion-molded article and the another member are firmly heat-fused together. Moreover, it is possible to produce a laminated body which has a reduced possibility that the expansion-molded article has a shape which is different from a required shape.

Furthermore, in a case where, around the at least one protrusion, the base surface is exposed outside, it is possible to prevent an air pocket from being generated between the expansion-molded article and the another member. As a result, it is possible to produce a laminated body in which the expansion-molded article and the another member are firmly heat-fused together and ununiform adhesion is prevented from occurring.

The method in accordance with another aspect of the present invention is preferably arranged so as to include a decompressing step.

According to the above configuration, it is possible to further prevent an air pocket from being generated between the expansion-molded article and the another member.

### Reference Signs List

1 Laminated body
10, 10a, 10b, 10c, 10d, 10d_1, 10e, 10f, 10g, 10h, 10i, 10j, 11, 12, 105, 106, 107 Expansion-molded article
20 Another member
110, 111, 112 Base surface
111a Horizontal surface
111b Vertical surface
111c Inclined planar surface
120, 120a, 120a_1, 120b, 120c, 120c_1, 120d, 120d_1, 120e, 120f, 120f_1, 120g, 120h, 120i, 120j Protrusion
121, 121a, 121a_1, 121b Depression
122, 131, 132, 133, 135, 137 Inclined surface
123 Depression bottom surface
124, 124a First protrusion
125, 125a, 126, 126a Second protrusion
134, 136, 138 Upper surface
139 Bottom surface
140 through 145 Curved surface
b1 through b17 Boundary line
c1, c2 Center point
d1 through d17 Direction
v1 Inflection point

## Claims

1. An expansion-molded article (10, 10a, 10b, 10c, 10d, 10d_1, 10e, 10f, 10g, 10h, 10i, 10j, 11, 12, 105, 106, 107) which is to be heat-fused with another member (20), comprising
at least one protrusion (120, 120a, 120a_1, 120b, 120c, 120c_1, 120d, 120d_1, 120e, 120f, 120f_1, 120g, 120h, 120i, 120j) which is formed on at least one surface (110) of the expansion-molded article which at least one surface (110, 111, 112) is to be heat-fused with the another member (20),
the at least one protrusion having at least two surfaces (122, 123, 131, 132, 133, 135, 137) as viewed in a planar view from above,
as a boundary line (b1 to b18) between the at least two surfaces, at least one boundary line being present which intersects, in the planar view, a direction (d1 to d17) from an outside of the at least one protrusion toward a center of an apex of the at least one protrusion,
the expansion-molded article being **characterised in that** it is composed of expanded particles.

2. The expansion-molded article as set forth in claim 1, wherein
a shape of the at least one protrusion (120, 120a, 120a_1, 120b, 120c, 120c_1, 120d, 120d_1, 120e, 120f, 120f_1, 120g, 120h, 120i, 120j) is at least one selected from the group consisting of
(1) a multi-stepped shape,
(2) a shape such that, as viewed from the above, the at least one protrusion is tapered in a direction from the outside of the at least one protrusion toward the apex of the at least one protrusion and has a ridge line on the apex of the at least one protrusion, and
(3) a shape such that the at least one protrusion has a plurality of protrusions on the apex of the at least one protrusion.

3. The expansion-molded article as set forth in claim 1 or 2, wherein:
the at least one protrusion (120, 120a, 120a_1, 120b, 120c, 120c_1, 120d, 120d_1, 120e, 120f, 120f_1, 120g, 120h, 120i, 120j) includes a first protrusion (124, 124a) and a second protrusion (125, 125a, 126, 126a); and
the second protrusion (125, 125a, 126, 126a) is formed on the first protrusion (124, 124a).

4. The expansion-molded article as set forth in claim 1 or 2, wherein the at least one protrusion (120, 120a, 120a_1, 120b, 120c, 120c_1, 120d, 120d_1, 120e, 120f, 120f_1, 120g, 120h, 120i, 120j) has a depression (121, 121a, 121a_1, 121b) in the apex of the at least one protrusion.

5. The expansion-molded article as set forth in any one of claims 1 through 4, wherein a bottom surface (123) of the at least one protrusion has a circular shape or an elliptical shape.

6. The expansion-molded article as set forth in any one of claims 1 through 5, wherein the at least one protrusion is formed on the at least one surface (110, 111, 112) of the expansion-molded article, which at least one surface is to be heat-fused with the another member (20), at a density of not less than 1 per square centimeter and not more than 40 per square centimeter, and is formed throughout a region of at least not less than 20% of the at least one surface of the expansion-molded article, which at least one surface is to be heat-fused with the another member.

7. The expansion-molded article as set forth in any one of claims 1 through 6, wherein:
the at least one surface of the expansion-molded article, which at least one surface is to be heat-fused with the another member (20), is constituted by a base surface (110, 111, 112) and the at least one protrusion which is formed on the base surface; and
around the at least one protrusion, the base surface is exposed outside.

8. A laminated body (1) comprising:
an expansion-molded article recited in any one of claims 1 through 7; and
another member (20) which is laminated on the expansion-molded article.

9. A method of producing a laminated body (1) by laminating and heat-fusing an expansion-molded article recited in any one of claims 1 through 7 and another member (20), the method comprising:
a laminating step of laminating the another member (20) on a laminating surface of the expansion-molded article on which laminating surface at least one protrusion (120, 120a, 120a_1, 120b, 120c, 120c_1, 120d, 120d_1, 120e, 120f, 120f_1, 120g, 120h, 120i, 120j) is formed; and
a pressing step of pressing the expansion-molded article and the another member (20) which are laminated.

10. The method as set forth in claim 9, further comprising a decompressing step.

## Patentansprüche

1. Expansionsgeformter Artikel (10, 10a, 10b, 10c, 10d, 10d_1, 10e, 10f, 10g, 10h, 10i, 10j, 11, 12, 105, 106, 107), der mit einem anderen Element (20) heißverschmolzen werden soll, der aufweist:
mindestens einen Vorsprung (120, 120a, 120a_1, 120b, 120c, 120c_1, 120d, 120d_1, 120e, 120f, 120f_1, 120g, 120h, 120i, 120j), der auf mindestens einer Oberfläche (110) des expansionsgeformten Artikels ausgebildet ist, wobei die mindestens eine Oberfläche (110, 111, 112) mit dem anderen Element (20) heißverschmolzen werden soll,
wobei der mindestens eine Vorsprung mindestens zwei Oberflächen (122, 123, 131, 132, 133, 135, 137) aufweist, wenn in einer Draufsicht von oben betrachtet,
wobei als eine Grenzlinie (b1 bis b18) zwischen den mindestens zwei Oberflächen, mindestens eine Grenzlinie vorhanden ist, die in der Draufsicht eine Richtung (d1 bis d17) von einer Außenseite des mindestens einen Vorsprungs zu einer Mitte einer Spitze des mindestens einen Vorsprungs schneidet, wobei der expansionsgeformte Artikel **dadurch gekennzeichnet ist, dass** er aus expandierten Partikeln besteht.

2. Expansionsgeformter Artikel nach Anspruch 1, wobei
eine Form des mindestens einen Vorsprungs (120, 120a, 120a_1, 120b, 120c, 120c_1, 120d, 120 d_1, 120e, 120f, 120f_1, 120g, 120h, 120i, 120j) mindestens eine ist, die aus der Gruppe ausgewählt ist, die besteht aus:
(1) einer mehrstufigen Form,
(2) einer Form, so dass, von oben gesehen, der mindestens eine Vorsprung in einer Richtung von der Außenseite des mindestens einen Vorsprungs zur Spitze des mindestens einen Vorsprungs hin verjüngt ist und eine Gratlinie an der Spitze des mindestens einen Vorsprungs aufweist, und
(3) einer Form, so dass der mindestens eine Vorsprung mehrere Vorsprünge an der Spitze des mindestens einen Vorsprungs aufweist.

3. Expansionsgeformter Artikel nach Anspruch 1 oder 2, wobei:
der mindestens eine Vorsprung (120, 120a, 120a_1, 120b, 120c, 120c_1, 120d, 120d_1, 120e, 120f, 120f_1, 120g, 120h, 120i, 120j) einen ersten Vorsprung (124, 124a) und einen zweiten Vorsprung (125, 125a, 126, 126a) aufweist; und
der zweite Vorsprung (125, 125a, 126, 126a) auf dem ersten Vorsprung (124, 124a) ausgebildet ist.

4. Expansionsgeformter Artikel nach Anspruch 1 oder 2, wobei der mindestens eine Vorsprung (120, 120a, 120a_1, 120b, 120c, 120c_1, 120d, 120d_1, 120e, 120f, 120f_1, 120g, 120h, 120i, 120j) eine Vertiefung (121, 121a, 121a_1, 121b) in der Spitze des mindestens einen Vorsprungs aufweist.

5. Expansionsgeformter Artikel nach einem der Ansprüche 1 bis 4, wobei eine Bodenfläche (123) des mindestens einen Vorsprungs eine runde oder elliptische Form aufweist.

6. Expansionsgeformter Artikel nach einem der Ansprüche 1 bis 5, wobei der mindestens eine Vorsprung auf der mindestens einen Oberfläche (110, 111, 112) des expansionsgeformten Artikels ausgebildet ist, wobei die mindestens eine Oberfläche mit dem anderen Element (20) heißverschmolzen werden soll, mit einer Dichte von nicht weniger als 1 pro Quadratzentimeter und nicht mehr als 40 pro Quadratzentimeter, und in einem Bereich von mindestens nicht weniger als 20 % der mindestens einen Oberfläche des expansionsgeformten Artikels ausgebildet ist, wobei die mindestens eine Oberfläche mit dem anderen Element heißverschmolzen werden soll.

7. Expansionsgeformter Artikel nach einem der Ansprüche 1 bis 6, wobei:
die mindestens eine Oberfläche des expansionsgeformten Artikels, die mit dem anderen Element (20) heißverschmolzen werden soll, durch eine Basisfläche (110, 111, 112) und den mindestens einen Vorsprung gebildet ist, der auf der Basisfläche ausgebildet ist; und
die Basisfläche um den mindestens einen Vorsprung herum nach außen freiliegt.

8. Laminierter Körper (1), der aufweist:
einen expansionsgeformten Artikel nach einem der Ansprüche 1 bis 7; und
ein weiteres Element (20), das auf den expansionsgeformten Artikel laminiert ist.

9. Verfahren zur Herstellung eines laminierten Körpers (1) durch Laminieren und Heißverschmelzen eines expansionsgeformten Artikels nach einem der Ansprüche 1 bis 7 und eines weiteren Elements (20), wobei das Verfahren aufweist:
einen Laminierungsschritt des Laminierens des anderen Elements (20) auf eine Laminierungsoberfläche des expansionsgeformten Artikels, wobei auf der Laminierungsoberfläche mindestens ein Vorsprung (120, 120a, 120a_1, 120b, 120c, 120c_1, 120d, 120d_1, 120e, 120f, 120f_1, 120g, 120h, 120i, 120j) ausgebildet ist; und
einen Pressschritt eines Pressens des expansionsgeformten Artikels und des anderen Elements (20), die laminiert sind.

10. Verfahren nach Anspruch 9, das ferner einen Dekompressionsschritt aufweist.

## Revendications

1. Article moulé par expansion (10, 10a, 10b, 10c, 10d, 10d_1, 10e, 10f, 10g, 10h, 10i, 10j, 11, 12, 105, 106, 107) destiné à être soumis à une thermofusion avec un autre élément (20), comprenant :
au moins une saillie (120, 120a, 120a_l, 120b, 120c, 120c_l, 120d, 120d_l, 120e, 120f, 120f_l, 120g, 120h, 120i, 120j) formée sur au moins une surface (110) dudit article moulé par expansion, ladite au moins une surface (110, 111, 112) devant être soumise à thermofusion avec l'autre élément (20),
ladite au moins une saillie ayant au moins deux surfaces (122, 123, 131, 132, 133, 135, 137) en vue en plan du dessus,
au moins une ligne de délimitation étant présentée en tant que ligne de délimitation (b1 à b18) entre les au moins deux surfaces, laquelle croise, en vue en plan, une direction (d1 à d17) reliant l'extérieur de ladite au moins une saillie au centre d'un sommet de ladite au moins une saillie,
ledit article moulé par expansion étant **caractérisé en ce qu'**il est composé de particules expansées.

2. Article moulé par expansion selon la revendication 1, où
la forme de ladite au moins une saillie (120, 120a, 120a_1, 120b, 120c, 120c_1, 120d, 120d_1, 120e, 120f, 120f_1, 120g, 120h, 120i, 120j) est au moins une forme sélectionnée dans le groupe constitué
(1) d'une forme pluri-étagée,
(2) d'une forme telle que, en vue du dessus, ladite au moins une saillie s'amincit dans une direction reliant l'extérieur de ladite au moins une saillie au sommet de ladite au moins une saillie et présente une ligne d'arête au sommet de ladite au moins une saillie, et
(3) d'une forme telle que ladite au moins une saillie présente une pluralité de saillies au sommet de ladite au moins une saillie.

3. Article moulé par expansion selon la revendication 1 ou la revendication 2, où :
ladite au moins une saillie (120, 120a, 120a_1, 120b, 120c, 120c_1, 120d, 120d_1, 120e, 120f, 120f_1, 120g, 120h, 120i, 120j) comprend une première saillie (124, 124a) et une deuxième saillie (125, 125a, 126, 126a) ; et où
la deuxième saillie (125, 125a, 126, 126a) est formée sur la première saillie (124, 124a).

4. Article moulé par expansion selon la revendication 1 ou la revendication 2, où ladite au moins une saillie (120, 120a, 120a_1, 120b, 120c, 120c_1, 120d, 120d_1, 120e, 120f, 120f_1, 120g, 120h, 120i, 120j) présente une dépression (121, 121a, 121a_1, 121b) au sommet de ladite au moins une saillie.

5. Article moulé par expansion selon l'une des revendications 1 à 4, où une surface de base (123) de ladite au moins une saillie est de forme circulaire ou elliptique.

6. Article moulé par expansion selon l'une des revendications 1 à 5, où ladite au moins une saillie est formée sur ladite au moins une surface (110, 111, 112) de l'article moulé par expansion, ladite au moins une surface devant être soumise à thermofusion avec l'autre élément (20), avec une densité non inférieure à 1 par centimètre carré et non supérieure à 40 par centimètre carré, et étant formée dans une zone d'au moins non inférieure à 20 % de ladite au moins une surface de l'article moulé par expansion, ladite au moins une surface devant être soumise à thermofusion avec l'autre élément.

7. Article moulé par expansion selon l'une des revendications 1 à 6, où :
ladite au moins une surface de l'article moulé par expansion, ladite au moins une surface devant être soumise à thermofusion avec l'autre élément (20), est constituée d'une surface de base (110, 111, 112) et d'au moins une saillie formée sur la surface de base ; et où,
autour de ladite au moins une saillie, la surface de base est exposée à l'extérieur.

8. Corps stratifié (1), comprenant :
un article moulé par expansion selon l'une des revendications 1 à 7 ; et
un autre élément (20), stratifié sur l'article moulé par expansion.

9. Procédé de production d'un corps stratifié (1) par stratification et thermofusion d'un article moulé par expansion selon l'une des revendications 1 à 7 et d'un autre élément (20), ledit procédé comprenant :
une étape de stratification consistant à stratifier de l'autre élément (20) sur une surface de stratification de l'article moulé par expansion, au moins une saillie (120, 120a, 120a_1, 120b, 120c, 120c_1, 120d, 120d_1, 120e, 120f, 120f_1, 120g, 120h, 120i, 120j) étant formée sur ladite surface de stratification ; et
une étape de compression consistant à comprimer l'article moulé par expansion et l'autre élément (20) qui sont stratifiés.

10. Procédé selon la revendication 9, comprenant en outre une étape de décompression.
